# EUROPÄISCHE PATENTANMELDUNG

(11) **EP 2 436 711 A1**
(43) Veröffentlichungstag der Anmeldung: **04.04.2012**
(21) Anmeldenummer: 10012677.0
(22) Anmeldetag: 01.10.2010
(51) Int. Cl.: C08G 16/02, C08L 61/26, D21F 1/00

(54) **Biokompositplatte**

(71) Anmelder: RESOPAL GMBH, 64823 Gross-Umstadt (DE)
(72) Erfinder: Schaefer, Donald, 91522 Ansbach (DE); Reitzel, Lutz, 64846 Gross-Zimmern (DE)
(74) Vertreter: Mai, Dörr, Besier

(57) **Zusammenfassung**

Biokompositplatte, umfassend
a) mindestens eine Naturfaser und
b) mindestens ein duroplastisches Biopolymer,
wobei.
o die Biokompositplatte eine Restfeuchte, bezogen auf ihr Gesamtgewicht, kleiner 8,0 Gew.% aufweist,
o die Biokompositplatte mindestens zwei Bögen Papier umfasst,
o das Biopolymer ein Furanharz einschließt, das durch Polymerisation einer Zusammensetzung erhältlich ist, die eine Verbindung der Formel (I) und/odei der Formel (II) enthält 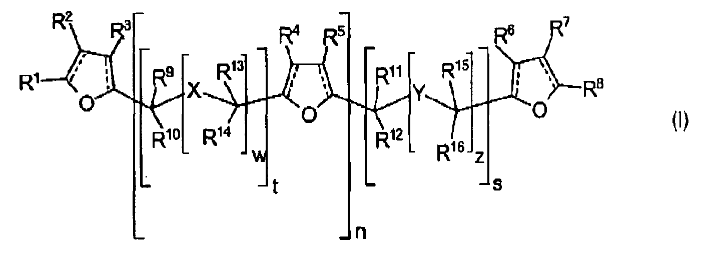 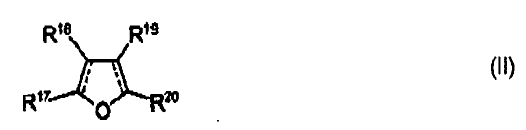 wobei n, t, s, w, z sowie die Reste X, Y, R¹, R², R³, R⁴, R⁵, R⁸, R⁷, R⁸, R⁹, R¹⁰, R¹¹, R¹², R¹³, R¹⁴, R¹⁵, R¹⁶, R¹⁷, R¹⁸, R¹⁹ und R²⁰ gemäß der Beschreibung definiert sind und
wobei die gestrichelte Linie eine optionale Doppelbindung darstellt, und
o der Gewichtsanteil des Biopolymers, bezogen auf das Gesamtgewicht der Biokompositptatte, mindestens 20,0 Gew.·% beträgt.

## Beschreibung

Die vorliegende Erfindung betrifft eine Biokompositplatte, Verfahren zu Ihrer Herstellung sowie ihre Verwendung.

Biokomposite oder Bioverbundwerkstoffe bezeichnen Verbundwerkstoffe mit einer biogenen Komponente, d. h. einer Komponente, die nicht durch chemische Syntheseverfahren gewonnen wurde. Drei Varianten kommen in diesem Zusammenhang insbesondere in Frage:
■ Verbunde aus Naturfasern und traditionellen Polymeren und anderen Matrixmatertalien,
■ Verbunde aus synthetischen Fasern und Biopolymeren und
■ Verbunde aus Naturfasern und Biopolymeren, die im Rahmen der vorliegenden Erfindung besonders im Vordergrund stehen, da ihre Herstellung aus ökologischen Gesichtspunkten am Ressourcen schonensten ist.

Blokomposite werden schon seit Jahrhunderten zum Beispiel in Form von strohverstärkten Lehmziegeln eingesetzt. Seit dem Ende des 20. Jahrhunderts werden sie auch vermehrt für industrielle Anwendungen verwendet. Hier kommen vor allern Naturfaserverbundwerkstoffe und die sogenannten Wood Plastic Composites zum Einsatz, die sich die Vorteile von Naturfasern im Vergleich zu traditionellen Verstärkungs- und Füllmaterialien zu Nutze machen. Dies sind, neben ihrer Nachhaltigkeit und der damit verbundenen Unabhängigkeit von fossilen Brennstoffen, ihre CO₂-Neutralität, aber auch ihre physikalischen Eigenschaften, wie ihre geringe Dichte, ihre hohe Festigkeit und ihre Steifigkeit.

Neben erdölbaslerten Polymeren, wie zum Beispiel Polypropylen und Polyethylen oder auch Epoxidharzen, werden in den letzten Jahren auch verstärkt Biopolymere als Matrixwerkstoff eingesetzt. Zu nennen sind vor allem das auf Maisstärke basierende Polylactid (Polymilchsäure; PLA), aber auch aus Palmöl hergestellte Harze oder Stärke kommen zum Einsatz. Diese Werkstoffe besitzen einige weitere Vorteile im Vergleich zu naturfaserverstärkten, erdölbasierten Polymeren. So sind sie in der Regel vollständig biologisch abbaubar und ihre Herstellungskosten, mit Ausnahme der im Herstellungsprozess eingesetzten Energiemengen, unabhängig vom Erdölprels. Zudem weisen sie eine deutlich bessere CO₂-Bilanz auf.

Allerdings sind ihre mechanischen Eigenschaften, insbesondere Ihre Festigkeit und ihre Steiflgkeit, ihre Wärmeformbeständigkeit, Ihre Larigzeitbeständigkeit sowie ihre Dauergebrauchbarkeit, für viele Anwendungen unzureichend. Insbesondere Polymilchsäure weist eine sehr geringe Wärmeformbeständigkeit auf, besitzt eine sehr niedrige Vicat-Erweichungstemperatur von ca. 70°C bis 75°C, erweicht im Übrigen bereits bei Temperaturen um 60°C merkilch und erlaubt nur extrem niedrige Dauergebrauchstemperaturen.

Darüber hinaus zeigt Polymilchsäure, wie viele anderen thermoplastischen Polymere, ein negatives Brandverhalten und tropft im Brandfall brennend ab, was aus sicherheitstechnischen Gesichtspunkten nachteilig ist.

In Anbetracht des Standes der Technik war es daher Aufgabe der vorliegenden Erfindung, Möglichkeiten zur Lösung der in dieser Anmeldung diskutierten Nachteile des Standes der Technik aufzuzeigen. Insbesondere sollten Wege zur Verbesserung der mechanischen Eigenschaften, vor allem der Festigkeit, der Steifigkeit, der Wärmeformbeständigkeit, der Langzeitbeständigkeit und der Dauergebrauchbarkeit herkömmlicher Biokomposite und Verbundwerkstoffe, gefunden werden. Weiterhin wurden Biokomposite mit einer besseren Wärmeformbeständigkeit, einem besseren Erweichungsverhalten und höheren Dauergebrauchstemperaturen gesucht. Darüber hinaus wurde ein besseres Brandverhalten, möglichst ohne brennendes Abtropfen, gewünscht. Abgesehen davon sollte eine möglichst gute Witterungsbeständigkeit und Temperaturbeständigkeit erreicht werden.

Gewünscht wurden dabei möglichst umweltverträgliche Lösungen, sowohl hinsichtlich der Rohstoffbasis aus regenerativen Quellen, als auch hinsichtlich der Energie und der CO₂-Bilanz, die zur Realisierung der Lösung erforderlich sind. Besonders wichtig war in diesem Zusammenhang insbesondere der Wunsch nach einer Lösung, die aus gesundheitlicher und umweltpolitischer Sicht möglichst unbedenklich ist und sich möglichst ohne den Einsatz von Halogen-haltigen, Schwefel-haltigen und/oder Stickstoff-haltigen Substanzen realisieren lässt, um die Bildung von Halogenverbindungen, Schwefeloxiden und/oder Stickoxiden bei der Verbrennung der Biokomposite bestmöglich zu vermeiden.

Schließlich sollte die Erfindung auf möglichst einfache Art und Weise, möglichst effektiv und kostengünstig verwirklicht werden können.

Gelöst werden diese sowie weitere Aufgaben, die sich aus den in dieser Anmeldung diskutierten Zusammenhängen unmittelbar ergeben, durch eine Biokompositplatte mit allen Merkmalen des vorliegenden Patentanspruchs 1. Die auf den Patentanspruch 1 rückbezogenen Unteransprüche beschreiben besonders zweckmäßige Ausführungsformen der erfindungsgemäßen Biokompositplatte Im Übrigen werden bevorzugte Verfahren zur Herstellung der erfindungsgemäßen Biokompositplatte sowie besonders vorteilhafte Anwendungsgebiete der erfindungsgemäßen Biokompositplatte unter Schutz gestellt.

Durch die Bereitstellung einer Biokompositplatte, die
a) mindestens eine Naturfaser und
b) mindestens ein duroplastisches Biopolymer umfasst,
   wobei
   o die Biokompositplatte eine Restfeuchte, bezogen auf ihr Gesamtgewicht, kleiner 8,0 Gew.-% aufweist,
   o die Biokompositplatte mindestens zwei Bögen Papier umfasst,
   o das Biopolymer ein Furanharz einschließt, das durch Polymerisation einer Zusammensetzung erhältlich ist, die eine Verbindung der Formel (I) und/oder der Formel (II) enthält 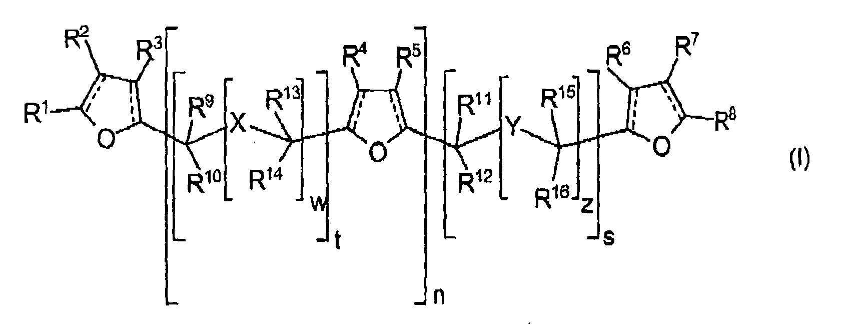 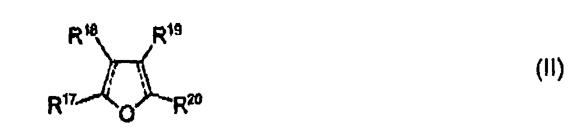 wobei
      - n eine ganze Zahl zwischen 0 und 20, vorzugsweise zwischen 0 und 10, insbesondere zwischen 0 und 6, ist,
      - t und s, jeweils unabhängig voneinander, eine ganze Zahl zwischen 1 und 20, vorzugsweise 1 und 10, Insbesondere zwischen 1 und 5, sind,
      - w und z, jeweils unabhängig voneinander, 0 oder 1 sind,
      - X und Y, jeweils unabhängig voneinander, O, S oder N-R²¹ sind,
      - R¹, R², R³, R⁴, R⁵, R⁶, R⁷, R⁸, R⁹, R¹⁰, R¹¹, R¹², R¹³, R¹⁴, R¹⁵, R¹⁶, R¹⁸, R¹⁹ und R²¹, jeweils unabhängig voneinander, Wasserstoff, C₁-C₂₀-Alkyl, C₂-C₂₀-Alkenyl, C₂-C₂₀-Alkinyl, C₅-C₂₄-Aryl, C₆-C₁₂-Heteroaryl, Carboxyaldehyd, Hydroxyl, Hydroxyalkyl, Carboxyl, Amino, Nitro, Formyl, Alkylamino, Aminoalkyl, Alkylaminoalkyl, Furyl, Furylalkyl, Hydroxyalkylfurylalkyl, Alkyloxy, Alkyloxyalkyl, Alkenyloxy, Alkylcarbonylalkenyl, Oxiranyl, Alkylcarbonaloxyalkyl, Alkyloxycarbonylalkenyl, Alkenylcarbonyloxyalkyl, Isocyanat, Isocyanatalkyl, Alkyloarboxy, Alkenylcarboxy, Alkylcarbonyl, Alkenylcarbonyl, Halogencarbonyl, Halogenalkyl, Halogenaryl, Halogenalkenyl, Imino, Thiol, Alkylthio, Thioalkyl, Alkylthioalkyl, Cyano, Alkylsulfonyl und/oder eine Sulfonsäuregruppe sind, wobei jede Gruppe mit C₁-C₂₀-Alkyl, C₂-C₂₀-Alkenyl, C₂-C₂₀-Alkinyl, C₅-C₂₄-Aryl, Hydroxyl, Carboxyl, Nitro, Amino, Furyl, Furylalkyl, Alkylfuryl, Hydroxyalkylfurylalkyl, Isocyanat, Formyl, Halogencarbonyl, Thiol und/oder Alkylthio substituiert sein kann, R¹⁷ Wasserstoff, C₁-C₂₀-Alkyl, C₂-C₂₀-Akenyl, C₂-C₂₀-Alkinyl, C₅-C₂₀-Aryl, C₅-C₁₂-Heteroaryl, Carboxyaldehyd, Hydroxyl, Hydroxyalkyl, Carboxyl, Amino, Nitro, Formyl, Alkylamino, Aminoalkyl, Alkylaminoalkyl, Furyl, Furylalkyl, Hydroxyalkylfurylalkyl, Alkyloxy, Alkyloxyalkyl, Alkenyloxy, Alkylcarbonylalkenyl, Oxiranyl, Alkylcarbonyloxyalkyl, Alkyloxycarbonylalkenyl, Alkenylcarbonyloxyalkyl, Isocyanat, Isocyanatalkyl, Alkylcarboxy, Alkenylcarboxy, Alkylcarbonyl, Alkenylcarbonyl, Halogencarbonyl, Halogenalkyl, Halogenaryl, Halogenalkenyl, Imino, Thiol, Alkylthio, Thioalkyl, Alkylthioalkyl, Cyano, Alkylsulfonyl und/oder eine Sulfonsäuregruppe ist, wobei jede Gruppe mit C₁-C₂₀-Alkyl, C₂-C₂₀-Alkenyl, C₂-C₂₀-Alkinyl, C₅-C₂₄-Aryl, Hydroxyl, Carboxyl, Nitro, Amino, Furyl, Furylalkyl, Alkylfuryl, Hydroxyalkylfurylalkyl, Isocyanat, Formyl, Halogencarbonyl, Thiol und/oder Alkylthio substituiert sein kann,
      - R²⁰ C₁-C₂₀-Alkyl, C₂-C₂₀-Alkenyl, C₂-C₂₀-Alkinyl, C₅-C₂₄-Aryl, C₅-C₁₂-Heteroaryl, Carboxyaldehyd, Hydroxyl, Hydroxyalkyl, Carboxyl, Amino, Nitro, Formyl, Alkylamino, Aminoalkyl, Alkylaminoalkyl, Furyl, Furylalkyl, Hydroxyalkylfurylalkyl, Alkyloxy, Alkyloxyalkyl, Alkenyloxy, Alkylcarbonylalkenyl, Oxiranyl, Alkylcarbonyloxyalkyl, Alkyloxycarbonylalkenyl, Alkenylcarbonyloxyalkyl, Isocyanat, Isocyanatalkyl, Alkylcarboxy, Alkenylcarboxy, Alkylcarbonyl, Alkenylcarbonyl, Halogencarbonyl, Halogenalkyl, Halogenaryl, Halogenalkenyl, Imino, Thiol, Alkylthio, Thioalkyl, Alkylthioalkyl, Cyano, Alkylsulfonyl und/oder eine Sulfonsäuregruppe ist, wobei jede Gruppe mit C₁-C₂₀-Alkyl, C₂-C₂₀-Alkenyl, C₂-C₂₀-Alkinyl, C₅-C₂₄-Aryl, Hydroxyl, Carboxyl, Nitro, Amino, Furyl, Furylalkyl, Alkylfuryl, Hydroxyalkylfurylalkyl, Isocyanat, Formyl, Halogencarbonyl, Thiol und/oder Alkylthio substituiert sein kann, und wobei die gestrichelte Linie eine optionale Doppelbindung darstellt, und
   o der Gewichtsanteil des Biopolymers, bezogen auf das Gesamtgewicht der Blokompositplatte, mindestens 20,0 Gew.-% beträgt,
gelingt es auf nicht ohne Weiteres vorhersehbare Welse eine Möglichkeit zur Lösung der in dieser Anmeldung diskutierten Nachteile des Standes der Technik aufzuzeigen. Insbesondere wird ein Weg zur Verbesserung der mechanischen Eigenschaften, vor allem der Festigkeit, der Steifigkeit, der Wärmeformbeständigkeit, der Langzeitbeständigkeit und der Dauergebrauchbarkeit herkömmlicher Biokomposite und Verbundwerkstoffe, angegeben. Darüber hinaus weist die erfindungsgemäße Biokompositplatte eine bessere Wärmeformbeständigkeit auf, zeigt ein deutlich besseres Erweichungsverhalten und erlaubt höhere Dauergebrauchstemperaturen. Weiterhin ist ihr Brandverhalten wesentlich besser, insbesondere ohne 0brennendes Abtropfen. Schließlich zeichnet sie sich auch durch eine sehr gute Witterungsbeständigkeit und Temperaturbeständigkeit aus.

Dabei ist die erfindungsgemäße Lösung äußerst umweltfreundlich, sowohl hinsichtlich der Rohstoffbasis aus regenerativen Quellen, als auch hinsichtlich der Energie und der CO₂-Bilanz, die zur Herstellung der erfindungsgemäßen Blokompositplatte erforderlich sind. So sind ihre Herstellkosten, mit Ausnahme der im Herstellungsprozess eingesetzten Energiemengen, unabhängig vom Erdölpreis. Weiterhin weist die erfindungsgemäße Biokompositplatte eine deutlich verbesserte CO₂-Bilanz auf.

Besonders wichtig ist in diesem Zusammenhang insbesondere, dass die erfindungsgemäße Blokompositplatte aus gesundheitlicher und umweltpolitischer Sicht äußerst unbedenklich ist. Sie umfasst vergleichsweise geringe Mengen an Halogen-haltigen, Schwefel-haltigen und/oder Stickstoff-haltigen Substanzen, mit der Folge, dass die Bildung von Halogenverbindungen, Schwefeloxiden und/oder Stickoxiden bei der Verbrennung der erfindungsgemäßen Biokompositplatte vergleichsweise gering ist.

Schließlich kann die Erfindung auf vergleichbar einfache Art und Weise, äußerst effektiv und kostengünstig verwirklicht werden.

Die erfindungsgemäße Biokompositplatte umfasst mindestens eine Naturfaser. Naturfasern sind alte Fasern, die von natürlichen Quellen, wie Pflanzen, Tieren oder Mineralien, stammen und sich ohne weitere chemische Umwandlungsreaktionen direkt einsetzen lassen, Bevorzugt werden in diesem Zusammenhang Pflanzenfasern und Tierfasern, Insbesondere Pflanzenfasern.

Die erfindungsgemäßen Naturfasern sind damit abzugrenzen von Chemiefasern, die synthetisch hergestellt werden.

Für die Zwecke der vorliegenden Erfindung geeignete Pflanzenfasern können unterschiedlichen Ursprungs sein und entsprechend vielfältige Eigenschaften aufweisen. Sie umfassen insbesondere Pflanzenfasern, die als Leitbündel im Stängel oder Stamm oder Pseudostamm, der Rinde, insbesondere als Bastfaser, oder als Samen-Fortsätze vorkommen. Weiterhin schließen sie Holzfasern ein, die im Rahmen der vorliegenden Erfindung ganz besonders geeignet sind.

Bevorzugte Pflanzenfasern umfassen Samenfasern, insbesondere Baumwolle (CO) aus den Samenhaaren der Frucht der Baumwollpflanze, Kapok (KP) aus dem Inneren der Kapselfrucht des echten Kapokbaumes, Pappelflaum und Akon; Bastfasern, insbesondere Bambusfasern, Brennnessel, Hanffasern (HA), Jute (JU), Kenaf, Leinen (LI) aus dem Gemeinen Lein, Hopfen, Ramie (RA) und Sunn-Hanf; Blattfasern, insbesondere Abacä (Manilahanf), Hartfasern aus den Blättern einer Faserbanane, Ananas, Caroä, Curauá, Henequen, Macambira, Neuseeländer Flachs und Sisal (SI) aus Agaven-Blättern; sowie Fruchtfasern, insbesondere Kokos (CC) aus der Fruchthülle der Kokospalmenfrüchte.

Die Blattfasern sowie die Kokosfaser werden gelegentlich auch als Hartfasern bezeichnet.

Neben der Sisalagave gibt es noch eine Reihe weiterer Faser liefernder Arten aus der Familie der Agaven, die u. a. zur Gattung der Furcraea gehören. Diese werden auch als Mauritlushanf bezeichnet und können für die vorliegende Erfindung ebenfalls vorteilhaft eingesetzt werden,

Darüber hinaus ist auch die Verwendung von verschiedenen Binsengräser, insbesondere von gespaltenem Bambus und von anderen Pflanzen, als Faserstoff besonders günstig.

Bevorzugte Naturfasern tierischen Ursprungs schließen die Fasern ein, die die Haarfollikel bel Tieren bilden, insbesondere die Fasern, die in Form einer Behaarung oder eines Fells vorhanden sind. Hinzu kommen Seldenfasern aus dem Kokon verpuppter Seidenraupen sowie andere aus Sekreten gebildete Fasern, wie die Spinnenseide oder die Byssusfasern.

Besonders geeignete Naturfasern tierischen Ursprungs umfassen Wolle und feine Tierhaare, insbesondere Wolle von Schafen (WO; gelegentlich als Schurwolle bezeichnet), Alpaka, Lama, Vikunja, Guanako, Angora (WA), Kanin, Kamelhaar (WK), Kaschmir (WS) und Mohair (WM); grobe Tierhaare, insbesondere Rinderhaar, vor allem die Haare des Yaks, Rosshaar und Ziegenhaar; sowie seiden, insbesondere Maulbeerseide (SE), Tussahseide (ST) und Muschelseide.

Die Abkürzungen in Klammern geben in diesem Zusammenhang die gültigen Kurzbezeichnungen nach DIN 60001-1 an.

Zu den erfindungsgemäß bevorzugten mineralischen Fasern gehören Attapulgit, Sepiolith und Wollastonit.

Bevorzugte Holzfasern schließen Holzstoff und Zellstoff ein.

Holzstoff wird vorzugsweise aus dem Rohstoff Holz, der hauptsächlich aus Lignocellulose besteht, gewonnen. Dabei besteht die Lignocellulose aus Cellulosemolekülen, die zu Fasern zusammengelagert sind. Eine Matrix aus Lignin durchwirkt die Cellulose, so dass ein druck- und reißfester Verbund entsteht.

Bei der Herstellung von Holzstoff erfolgt eine Zerfaserung des Holzes, insbesondere nach dem Schliff-Verlahren, dem Holzschliff-Verfahren, dem Druckschliff-Verfahren, dem Refiner-Verfahren, dem TMP-Verfahren (Thermo Mechanical Pulp-Verfahren) oder dem CTMP-Verfahren (Chemo Thermo Mechanical Pulp-Verfahren).

Bei der Herstellung von Zellstoff hingegen wird der Ligninanteil mit chemischen Methoden, insbesondere dem alkalischen Sulfat-Verfahren oder dem sauren Sulfit-Verfahren, entfernt, so dass bei geringerer Ausbeute und höherem Aufwand der höherwertige Zellstoff gewonnen wird, der fast vollständig aus Cellulose besteht. Meist wird Rundholz oder Prügelholz eingesetzt, wobei Nadelholz wegen der Langfaserigkelt bevorzugt wird.

Für die Zwecke der vorliegenden Erfindung sind Cellulosefasern ganz besonders geeignet. Dementsprechend ist der Anteil von Cellulosefasern, bezogen auf das Gesarntgewicht der Naturfasern, vorzugsweise größer 50,0 Gew.-%, zweckmäßigerweise größer 60,0 Gew.-%, bevorzugt größer 70,0 Gew.-%, besonders bevorzugt größer 80,0 Gew.-%, günstigerweise größer 90,0 Gew.-%, Insbesondere größer 95,0 Gew.-%. Im Rahmen einer ganz besonders bevorzugten Ausführungsform der vorliegenden Erfindung werden ausschließlich Cellulosefasern verwendet.

Im Rahmen der vorliegenden Erfindung umfasst die Biokompositplatte mindestens zwei Bögen Papier, die vorzugsweise einen Papierverbund bilden, der im Folgenden gelegentlich auch als Kernschicht bezeichnet wird.

Papier bezeichnet gemäß DIN 6730 (1996-05) einen flächigen, im Wesentlichen aus Fasern vorwiegend pflanzlicher Herkunft bestehenden Werkstoff, der durch Entwässerung einer Faseraufschwemmung auf einem Sieb gebildet wird. Dabei entsteht ein Faserfilz, der anschließend verdichtet und getrocknet wird.

Für die Zwecke der vorliegenden Erfindung umfasst das Papier vorzugsweise mindestens 50,0 Gew.-%, bevorzugt mindestens 60,0 Gew.-%, besonders bevorzugt mindestens 70,0 Gew.-%, günstigerweise mindestens 80,0 Gew.-%, noch mehr bevorzugt mindestens 90,0 Gew.-%, insbesondere 91,0 bis 95,0 Gew.-%, Naturfasern, insbesondere Cellulosefasern. Der Anteil von Füllstoffen, insbesondere von Kaolin und/oder Calciumcarbonat, ist vorzugsweise kleiner 20,0 Gew.-%, bevorzugt kleiner 15,0 Gew.-%, besonders bevorzugt kleiner 10,0 Gew.-% und liegt zweckmäßigerweise im Bereich von 6,0 Gew.-% bis 9,0 Gew.-%. Diese Angaben beziehen sich jeweils auf das Gesamtgewicht des Papiers und addieren sich vorzugsweise zu 100,0 Gew.-%.

Im Rahmen einer besonders bevorzugten Ausführungsform der vorliegenden Erfindung handelt es sich bei dem Papier um Recyclingpapier, weiches vorzugsweise überwiegend aus wiederverwertetem Altpapier besteht und deshalb besonders umweltfreundlich ist. Vorteilhaft ist dabei neben der Schonung der Holz-Reserven der im Vergleich zur konventionelle Papierherstellung um zwei Drittel verringerte Energie- und Wasserverbrauch.

Die Qualität und Reißfestigkeit des Papiers lässt sich durch das Beimischen neuer Fasern steigern, wobei der Anteil des Recyclingpapiers jedoch vorzugsweise mindestens 80,0 Gew.-%, bezogen auf das Gesamtpapiergewicht, beträgt.

Im Rahmen einer besonders bevorzugten Ausführungsform der vorliegenden Erfindung wird ungebleichtes Altpapier als Recyclingpapier eingesetzt.

Das Papierrecycling erfolgt vorzugsweise nach dem folgenden Verfahren:
Zunächst wird das Papier in Wasser in seine einzelnen Papierlasern zerlegt, wodurch ein dünnflüssiger Brei entsteht; dieses Stadium wird üblicherweise als Wiederaufschlämmung (Re-Suspension) bezeichnet.

Als nächstes durchläuft der wässrige Brei einen Reinigungsvorgang, um nichtfaserige Fremdkörper zu entfernen. Dieser Schritt umfasst häufig auch einen Waschvorgang mithilfe chemischer Reinigungsmittel.

Ein Entfärben der Fasern, insbesondere mittels Natriumhydroxid oder Natriumcarbonat, wird vorzugsweise nicht durchgeführt. Gleiches gilt für ein Bleichen, z. B. mit Peroxiden oder Hydrosulfiten, um Farbpartikel aus dem Papierbrei zu entfernen. Auch dieses erfolgt vorzugsweise nicht.

Zuletzt wird aus dem fertigen Faserstoff ein "neues" Papiererzeugnis hergestellt, vorzugsweise durch Mischen mit Primärfasern von Bäumen in unterschiedlichen Proportionen oder einfach durch das direkte Erzeugen von Recyclingpapier.

Der Vorgang der eigentlichen Blattschöpfung ist dann üblicherweise derselbe wie bei Frischfaserpapier:
Zunächst wird die Papierbreimischung weiter mit Wasser verdünnt, wodurch ein sehr dünnflüssiger Brei entsteht. Diese dünnflüssige Masse lässt man dann durch eine feinmaschige Siebpartie sickern, um ein Fasergewebe zu bilden.

Diese sich bewegende Fasergewebebahn wird zu einem fortlaufenden Blatt Papier gepresst und getrocknet.

Während des Modellierungsvorgangs wird vorzugsweise eine gewisse Menge an Papierbrei, zweckmäigerweise kontinuierlich, auf mindestens ein Sieb gegeben, so dass die Fasern auf dem Sieb ein Blatt bilden und überschüssiges Wasser abfließen kann. Das Papier kann dann entnommen werden und zu trocknen beginnen. Nach dem Trocknen kann man dieses fortlaufende Fasergewebe auf Rollen wickeln.

Für weitere Details wird auf die Fachliteratur, insbesondere auf Römpp-Lexikon Chemie; Herausgeber: Jürgen Falbe, Manfred Regitz; bearbeitet von Eckard Amelingmeier; Stuttgart, New York; Thieme; 10. Auflage; Band 1 A-Cl (1996), Stichwort "Altpapier" und Band 4 M-Pk (1998), Stichwort "Papier" sowie die dort angegebenen Fundstellen, verwiesen.

Im Rahmen der vorliegenden Erfindung ist die Verwendung von Kraftpapier besonders vorteilhaft. Kraftpapier ist nach DIN 6730 ein Papier, das überwiegend aus Kraftzellstoff besteht, dem Kraftzellpapier zugesetzt sein kann, und das eine hohe Festigkeit, insbesondere eine hohe Zugfestigkeit, und eine hohe Beständigkeit aufweist. Kraftpapier wird üblicherweise wenigstens zu 90 % aus frischem, vorzugsweise ungebleichtem Sulfatzellstoff (Kraftzellstoff) hergestellt. Ferner kann Kraftpapier neben dem Zellstoff noch Stärke, Alaun und/oder Leim enthalten, um zum Beispiel bestimmte Oberflächeneffekte und Festigkeitssteigerungen zu erzielen. Ein bevorzugtes Kraftpapier ist Natron-Kraftpapier, das dem Fachmann auf dem Gebiet der Verbundwerkstoffe geläufig ist.

Die Anzahl der eingesetzten Papierbögen hängt im Wesentlichen von der gewünschten Dicke der Biokompositplatte ab. Vorzugsweise enthält sie zwei bis 200 Bögen, bevorzugter 3 bis 150 Bögen und insbesondere 4 bis 100 Bögen Papier, Insbesondere Recyclingpapier.

Das Gewicht des erfindungsgemäß verwendeten Papiers ist nicht weiter eingeschränkt. Es hängt insbesondere von der Anzahl der eingesetzten Papierbögen und somit von der gewünschten Dicke der Biokompositplatte ab. Gemäß einer bevorzugten Ausführungsform liegt das Gewicht der verwendeten Papierbögen im Bereich von 125 g/m² bis 250 g/m², vorzugsweise 140 g/m² bis 230 g/m².

Gemäß einer bevorzugten Ausführungsform liegt die Enddicke der erfindungsgemäßen Biokompositplatte im Bereich von 0,75 mm bis 0,85 mm, vorzugsweise bei 0,8 mm. In diesem Fall kann es bevorzugt sein, wenn 4 Papierbögen verwendet werden, die ein Gewicht von 125 g/m² bis 175 g/m², vorzugsweise 150 g/m², aufweisen. Andererseits können hierfür auch 3 Papierbögen eingesetzt werden, die ein Gewicht im Bereich von 200 g/m² bis 240 g/m², vorzugsweise im Bereich von 210 g/m² bis 230 g/m², aufweisen.

Gemäß einer weiteren bevorzugten Ausführungsform liegt die Enddicke der erfindungsgemäßen Biokompositplatte im Bereich von 0,95 mm bis 1,05 mm, vorzugsweise bei 1,0 mm. In diesem Fall kann es bevorzugt sein, wenn 5 Papierbögen verwendet werden, die ein Gewicht von 125 g/m² bis 175 g/m², vorzugsweise 150 g/m², aufweisen. Andererseits können hierfür auch 4 Papierbögen eingesetzt werden, die ein Gewicht im Bereich von 200 g/m² bis 240 g/m², vorzugsweise im Bereich von 210 g/m² bis 230 g/m², aufweisen.

Gemäß noch einer weiteren bevorzugten Ausführungsform liegt die Enddicke der erfindungsgemäßen Biokompositplatte im Bereich von 1,15 mm bis 1,25 mm, vorzugsweise bei 1,2 mm. In diesem Fall kann es bevorzugt sein, wenn 6 Papierbögen verwendet werden, die ein Gewicht von 125 g/m² bis 175 g/m², vorzugsweise 150 g/m², aufweisen. Andererseits können hierfür auch 5 Papierbögen eingesetzt werden, die ein Gewicht im Bereich von 200 g/m² bis 240 g/m², vorzugsweise im Bereich von 210 g/m² bis 230 g/m², aufweisen.

Gemäß noch einer weiteren bevorzugten Ausführungsform ist die Enddicke der der erfindungsgemäßen Biokompositplatte größer 1,0 mm, bevorzugt größer 1,25 mm, besonders bevorzugt größer 1,5 mm, insbesondere mindestens 2,0 mm und liegt vorzugsweise im Bereich von 2,0 mm bis 40,0 mm, bevorzugt im Bereich von 2,0 mm bis 30,0 mm, besonders bevorzugt im Bereich von 2,0 mm bis 20,0 mm. Die Herstellung dieser Platte erfolgt vorzugsweise unter Verwendung von Papierbögen, die ein Gewicht im Bereich von 125 g/m² bis 250 g/m², vorzugsweise im Bereich von 140 g/m² bis 230 g/m², aufweisen.

Auf einer Oberfläche des Papierverbunds (Kernschicht) ist im Rahmen einer besonders bevorzugten Ausführungsform der vorliegenden Erfindung eine Dekorschicht aufgebracht. Durch diese Dekorschicht erhält die erfindungsgemäße Biokompositplatte vorzugsweise ihre Optik Demnach bezeichnet die Dekorschicht diejenige auf dem Papierverbund aufgebrachte Schicht, deren Muster vom Betrachter visuell wahrgenommen werden kann.

Für die Zwecke der vorliegenden Erfindung besonders geeignete Dekorschichten umfassen Dekorpapiere, Textilien, Gewebe, Stoffe und Tapeten, wobei naturfaserhaltige Materialien in diesem Zusammenhang ganz besonders bevorzugt werden.

Hierin verwendet, bezieht sich Dekorpapier auf jedes Material, das für die Verbindung mit der darunter liegenden Kernschicht geeignet ist und ein Dekor wiedergeben kann. Das bevorzugte Material für das Dekorpapier ist Papier, insbesondere Recyclingpapier.

Üblicherweise wird das Dekor auf das Dekorpapier mittels eines Druckprozesses aufgebracht. So kann beispielsweise mittels fototechnischer Reproduktion ein beliebiges Motiv erstellt und im Tiefdruckverfahren auf das Dekorpapier aufgedruckt werden. Das Motiv kann zum Beispiel aus Holz-, Stein-, Keramik, Farb- und/oder Fantasiemustern bestehen. Ferner kann das Motiv aber auch durch Bestreichen des Dekorpapiers mit einer oder mehreren Farben erfolgen.

Das Flächengewicht des verwendeten Dekorpapiers Ist nicht weiter eingeschränkt. Vorzugsweise liegt das Flächengewicht im Bereich von 40 g/m² bis 120 g/m², mehr bevorzugt im Bereich von 60 g/m² bis 100 g/m², insbesondere bei 70 g/m² bis 90 g/m². Dies gilt insbesondere für Druckdekore.

Textilien bezeichnen im Sinne der vorliegenden Erfindung flexible Materialien, die aus einem Verbund von Fasern bestehen. Sowohl Fasern als auch Garne und textile Flächen, wie Gewebe, Gewirke oder Gestricke, werden unter dem Oberbegriff Textilien zusammengefasst. Für weitere Details wird auf die Norm DIN 60000 verwiesen.

Gewebe ist der Oberbegriff für manuell oder maschinell gefertigte Erzeugnisse der Weberei, wie Tuch, Sarnt, Velours, Plüsch, Frottee und sonstige textile Flächengebilde aus mindestens zwei rechtwinklig oder nahezu rechtwinklig verkreuzten Fadensystemen.

Die Fäden in Längsrichtung bezeichnet man als Kette oder Kettfäden. Die Querfäden heißen Schuss oder Schussfäden, Verbunden sind die Fäden durch die Verbindungsart Fadenverkreuzung. Fadenverkreuzung bedeutet nicht, dass Fäden kreuzend aufeinander liegen, sondern, dass Fäden in einem bestimmten Rhythmus (der Bindung genannt wird) über und unter den querliegenden Fäden durchgehen. Damit ein Gewebe ausreichend schiebefest ist, werden die Kett- und Schussfäden vorzugsweise relativ dicht gewebt.

Tapeten sind Bahnen aus Zellulose, Glasgewebe oder Kunststoff, seltener auch aus Goldleder, Leder oder Leinwand, die mittels geeignetem Klebstoff auf die Wand geklebt werden können. Für die Zwecke der vorliegenden Erfindung werden Tapeten besonders bevorzugt, die Naturfasern, insbesondere Cellulose, umfassen.

Zwischen der Kernschicht und der Dekorschicht können gegebenenfalls weitere Schichten, wie zum Beispiel eine Underlayschicht, angeordnet sein, Diese Underlayschicht kann beispielsweise dazu dienen, einen Verzug der Biokompositplatte zu verhindern und/oder elektrostatische Aufladungen zu reduzieren. Vorzugsweise umfasst die Underlayschicht einen oder mehrere Bögen Recyclingpapier.

Im Rahmen der vorliegenden Erfindung umfasst die Biokompositplatte weiterhin mindestens ein Biopolymer, das als Bindemittel die verschiedenen Papierbögen miteinander verbindet. Wenn neben der Kernschicht auch eine Dekorschicht und/oder eine Underlayschicht vorgesehen ist, dann umfasst das Bindemittel, das ggf. die Underlaybögen untereinander, ggf. die Kernschicht mit der Underlayschicht und ggf. die Underlayschicht mit der Dekorschicht verbindet, vorzugsweise ebenfalls mindestens ein Biopolymer.

Dabei ist dem Fachmann klar, dass es insbesondere an den Grenzflächen einzelner Schichten, wie z. B. der Grenzfläche zwischen Kernschicht und Dekorschicht zu einem Vermischen der verwendeten Bindemittel kommen kann und die Grenzen zwischen den einzelnen Schichten zumeist nicht durch das verwendete Bindemittel, sondern vor allem durch die äußersten, die einzelnen Schichten bildenden Bögen definiert werden.

Biopolymere bezeichnen im Rahmen der vorliegenden Erfindung Polymere, die überwiegend, vorzugsweise zu mehr als 50,0 Gew,-%, bevorzugt zu mehr als 75,0 Gew.-%, besonders bevorzugt zu mehr als 90,0 Gew.-%, zweckmäßigerweise zu mehr als 95,0 Gew.-%, insbesondere zu 100,0 Gew,-%, aus nachwachsenden Rohstoffen hergestellt werden. Bei Biopolymeren kann es sich um biologisch abbaubare oder um dauerhafte Polymere handeln, wobei letztere erfindungsgemäß besonders bevorzugt werden.

Für die Zwecke der vorliegenden Erfindung liegt das Biopolymer als Duroplast im ausgehärteten Zustand vor,

Duroplaste, auch Duromere genannt, sind Kunststoffe, die nach ihrer Aushärtung bei der Gebrauchstemperatur, vorzugsweise bei Temperaturen im Bereich von 0°C bis 100°C, insbesondere bei 25°C, nicht mehr verformt werden können. Duroplaste sind harte, glasartige Polymerwerkstoffe, die über chemische Hauptvalenzbindungen dreldimensiona4 fest vernetzt sind. Die Vernetzung erfolgt beim Mischen von Vorprodukten mit Verzweigungsstellen und wird entweder bei Raumtemperatur mit Hilfe von Katalysatoren chemisch (isotherm) oder bei hohen Temperaturen thermisch (exotherm) aktiviert.

Im Rahmen der vorliegenden Erfindung schließt das Biopolymer mindestens ein Furanharz ein, vorzugsweise ein Polymer, das in der Hauptkette ggf, substituierte Furanringe aufweist. Dabei ist das Furanharz durch Polymerisation einer Zusammensetzung erhältlich, die eine Verbindung der Formel (I) und/oder der Formel (II) enthält 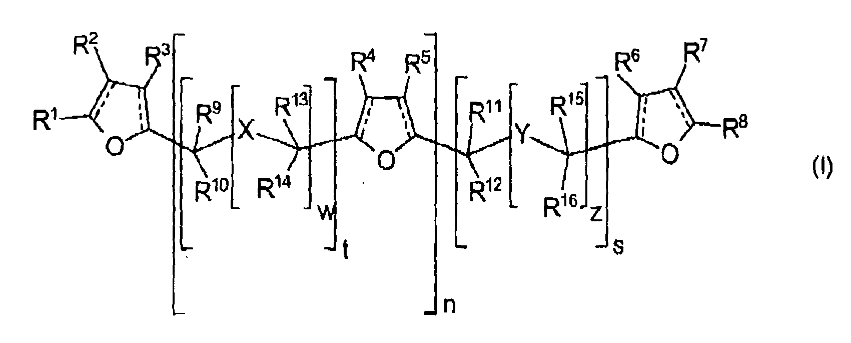 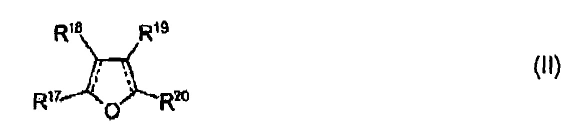 enthält, wobei
- n eine ganze Zahl zwischen 0 und 20, vorzugsweise zwischen 0 und 10, insbesondere zwischen 0 und 5, ist,
- t und s, jeweils unabhängig voneinander, eine ganze Zahl zwischen 1 und 20, vorzugsweise 1 und 10, insbesondere zwischen 1 und 5, sind,
- w und z, jeweils unabhängig voneinander, 0 oder 1 sind,
- X und Y, jeweils unabhängig voneinander, O, S oder N-R²¹ sind,
- R¹, R², R³, R⁴, R⁵, R⁶, R⁷, R⁸, R⁹, R¹⁰, R¹¹, R¹², R¹³, R¹⁴, R¹⁵, R¹⁶, R¹⁸, R¹⁹ und R²¹, jeweils unabhängig voneinander, Wasserstoff, C₁-C₂₀-Alkyl, C₂-C₂₀-Alkenyl, C₂-C₂₀-Alkinyl, C₅-C₂₄-Aryl, C₅₋C₁₂-Heteroaryl, Carboxyaldehyd, Hydroxyl, Hydroxyalkyl, Carboxyl, Amino, Nitro, Formyl, Alkylamino, Aminoalkyl, Alkylaminoalkyl, Furyl, Furylalkyl, Hydroxyalkylfurylalkyl, Alkyloxy, Alkyloxyalkyl, Alkenyloxy, Alkylcarbonylalkenyl, Oxiranyl, Alkylcarbonaloxyalkyl, Alkyloxycarbonylalkenyl, Alkenylcarbonyloxyalkyl, Isocyanat, Isocyanatalkyl, Alkylcarboxy, Alkenylcarboxy, Alkylcarbonyl, Alkenylcarbonyl, Halogencarbonyl, Halogenalkyl, Halogenaryl, Halogenalkenyl, Imino, Thiol, Alkylthio, Thioalkyl, Alkylthioalkyl, Cyano, Alkylsulfonyl und/oder eine Sulfonsäuregruppe sind, wobei jede Gruppe mit C₁-C₂₀-Alkyl, C₂-C₂₀-Alkonyl, C₂₋C₂₀-Alkinyl, C₅-C₂₀-Aryl, Hydroxyl, Carboxyl, Nitro, Amino, Furyl, Furylalkyl, Alkylfuryl, Hydroxyalkylfurylalkyl, Isocyanat, Formyl, Halogencarbonyl, Thiol und/oder Alkylthio substituiert sein kann,
- R¹⁷ Wasserstoff, C₁-C₂₀-Alkyl, C₂-C₂₀-Alkenyl, C₂-C₂₀-Alkinyl, C₅-C₂₄-Aryl, C₅-C₁₂-Heteroaryl, Carboxyaldehyd, Hydroxyl, Hydroxyalkyl, Carboxyl, Amino, Nitro, Formyl, Alkylamino, Aminoalkyl, Alkylaminoalkyl, Furyl, Furylalkyl, Hydroxyalkylfurylalkyl, Alkyloxy, Alkyloxyalkyl, Alkenyloxy, Alkylcarbonylalkenyl, Oxiranyl, Alkylcarbonyloxyalkyl, Alkyloxycarbonylalkenyl, Alkenylcarbonyloxyalkyl, Isocyanat, Isocyanatalkyl, Alkylcarboxy, Alkenylcarboxy, Alkylcarbonyl, Alkenylcarbonyl, Halogencarbonyl, Halogenalkyl, Halogenaryl, Halogenalkenyl, Imino, Thiol, Alkylthio, Thioalkyl, Alkylthioalkyl, Cyano, Alkylsulfonyl und/oder eine Sulfonsäuregruppe ist, wobei jede Gruppe mit C₁-C₂₀-Alkyl, C₂-C₂₀-Alkenyl, C₂-C₂₀-Alkinyl, C₅-C₂₄-Aryl, Hydroxyl, Carboxyl, Nitro, Amino, Furyl, Furylalkyl, Alkylfuryl, Hydroxyalkylfurylalkyl, Isocyanat, Formyl, Halogencarbonyl, Thiol und/oder Alkylthio substituiert sein kann,
- R²⁰ C₁-C₂₀-Alkyl, C₂-C₂₀-Alkenyl, C₂-C₂₀-Alkinyl, C₅-C₂₄-Aryl, C₅-C₁₂-Heteroaryl, Carboxyaldehyd, Hydroxyl, Hydroxyalkyl, Carboxyl, Amino, Nitro, Formyl, Alkylamino, Aminoalkyl, Alkylaminoalkyl, Furyl, Furylalkyl, Hydroxyalkylfurylalkyl, Alkyloxy, Alkyloxyalkyl, Alkenyloxy, Alkylcarbonylalkenyl, Oxiranyl, Alkylcarbonyloxyalkyl, Alkyloxycarbonylalkenyl, Alkenylcarbonyloxyalkyl, Isocyanat, Isocyanatalkyl, Alkylcarboxy, Alkenylcarboxy, Alkylcarbonyl, Alkenylcarbonyl, Halogencarbonyl, Halogenalkyl, Halogenaryl, Halogenalkenyl, Imino, Thiol, Alkylthio, Thioalkyl, Alkylthioalkyl, Cyano, Alkylsulfonyl und/oder eine Sulfonsäuregruppe ist, wobei jede Gruppe mit C₁-C₂₀-Alkyl, C₂-C₂₀-Alkenyl, C₂-C₂₀-Alkinyl, C₅-C₂₄-Aryl, Hydroxyl, Carboxyl, Nitro, Amino, Furyl, Furylalkyl, Alkylfuryl, Hydroxyalkylfurylalkyl, Isocyanat, Formyl, Halogencarbonyl, Thiol und/oder Alkylthio substituiert sein kann, und
wobei die gestrichelte Linie eine optionale Doppelbindung darstellt.

Im Rahmen der vorliegenden Erfindung sind die verwendeten Bezeichnungen dabei wie folgt zu verstehen.

Die Bezeichnung "Alkyl", selber oder als Teil eines anderen Substituenten, steht für eine geradkettige oder verzweigte, gesättigte Kohlenwasserstoffgruppe, bei welcher die Kohlenstoffatome durch Kohlenstoff-Kohlenstoff-Einfachbindungen miteinander verbunden sind und die vorzugsweise 1 bis 20 Kohlenstoffatome, günstigerweise 1 bis 10 Kohlenstoffatome, bevorzugt 1 bis 8 Kohlenstoffatome, besonders bevorzugt 1 bis 6 Kohlenstoffatome, insbesondere 1, 2, 3 oder 4 Kohlenstoffatorne, aufweist. Wenn im Rahmen der vorliegenden Anmeldung ein tiefgestellter Index nach einem Kohlenstoffatom verwendet wird, dann gibt der Index die Anzahl der Kohlenstoffatome an, die die besagte Gruppe enthält. So steht C₁₋₄ Alkyl beispielsweise für ein Alkyl mit 1 bis 4 Kohlenstoffatomen. Beispiele bevorzugter Alkylgruppen umfassen Methyl, Ethyl, Propyl, Isopropyl, Butyl, Isobutyl, sec-Butyl, tert.-Butyl, 2-Methylbutyl, Pentyl, Iso-Amyl und seine Isomere, Hexyl und seine Isomere, Heptyl und seine Isomere und Octyl und seine Isomere. Wenn der Ausdruck "Alkyl" zusammen mit einem weiteren, vorangestellten Ausdruck verwendet wird, wie z. B. in "Hydroxyalkyl", bezeichnet dies eine wie zuvor definierte Alkylgruppe, die mit einem oder zwei, vorzugsweise einem, Substituenten der konkret genannten, auch wie hierin definierten Gruppe substituiert ist. Der Ausdruck "C₁-C₂₀-Alkyl", so wie er hierin verwendet wird, steht für eine Alkylgruppe mit 1, 2, 3, 4, 5, 6, 7, 8, 9, 10, 11, 12, 13, 14, 16, 16, 17, 18, 19 oder 20 Kohlenstoffatomen.

Die Bezeichnung "Alkenyl", selber oder als Teil eines anderen Substituenten, steht für eine geradkettige oder verzweigte Kohlenwasserstoffkette, die mindestens eine Kohlenstoff-Kohlenstoff-Doppelbindung umfasst und die vorzugsweise 2 bis 20 Kohlenstoffatome, günstigerweise 2 bis 10 Kohlenstoffatome, bevorzugt 2 bis 8 Kohlenstoffatome, besonders bevorzugt 2 bis 6 Kohlenstoffatome, insbesondere 2, 3 oder 4 Kohlenstoffatome, aufweist. Beispiele bevorzugter Alkenylgruppen umfassen Ethenyl (Vinyl), 2-Propenyl, 2-Butenyl, 3-Butenyl, 2-Pentenyl und seine Isomere, 2-Hexenyl und seine Isomere, 2-Heptenyl und seine Isomere, 2-Octenyl und seine Isomere, 2,4-Pentadienyl usw. Der Ausdruck "C₂-C₂₀-Alkenyl", so wie er hierin verwendet wird, steht für eine Alkenylgruppe mit 2, 3, 4, 5, 6, 7, 8,9,10,11, 12, 13,14, 15,16, 17,18, 19 oder 20 Kohlenstoffatomen.

Die Bezeichnung "Alkinyl", selber oder als Teil eines anderen Substituenten, steht für eine geradkettige oder verzweigte Kohlenwasserstoffkette, die mindestens eine Kohlenstoff-Kohlenstoff-Dreifachbindung umfasst und die vorzugsweise 2 bis 20 Kohlenstoffatome, günstigerweise 2 bis 10 Kohlenstoffatome, bevorzugt 2 bis 8 Kohlenstoffatome, besonders bevorzugt 2 bis 6 Kohlenstoffatome, Insbesondere 2, 3 oder 4 Kohlenstoffatome, aufweist. Beispiele bevorzugter Alkinylgruppen umfassen Ethinyl, 2-Propinyl, 2-Butinyl, 3-Butinyl, 2-Pentinyl und seine Isomere, 2-Hexinyl und seine Isomere, 2-Heptinyl und seine Isomere, 2-Octinyl und seine Isomere usw. Der Ausdruck "C₂-C₂₀-Alkinyl", so wie er hierin verwendet wird, steht für eine Alkinylgruppe mit 2, 3, 4, 5, 6, 7, 8, 9, 10, 11, 12, 13, 14, 15, 16, 17, 18, 19 oder 20 Kohlenstoffatomen.

Wenn die Alkylgruppen divalent sind, d. h. sie zwei Einfachbindungen zur Anbindung an zwei andere Gruppen aufweisen, werden sie als "Alkylen" Gruppen bezeichnet.

Beispiele bevorzugter Alkylengruppen umfassen Methylen, Ethylen, Methylmethylen, Trimethylen, Propylen, Tetramethylen, Ethylethylen, 1,2-Dimethylethylen, Pentamethylen und Hexamethylen. Entsprechend werden Alkenylgruppen und Alkinylgruppen, die zwei Einfachbindungen zur Anbindung an zwei andere Gruppen aufweisen, als "Alkenylen" Gruppen bzw. als "Alkinylen" Gruppen bezeichnet.

Die Bezeichnung "Aryl", selber oder als Teil eines anderen Substituenten, steht für ein aromatisches Kohlenwasserstoff-Ringsystem, insbesondere für ein monocyclisches, bicyclisches oder tricyclisches Ringsystem oder ein Ringsystem, das 1 bis 4 Ringe umfasst, die miteinander verschmolzen oder kovalent miteinander verbunden sind, wobei die Ringe vorzugsweise jeweils 5 bis 8 Kohlenstoffatome umfassen und mindestens einer der Ringe aromatisch ist. Der aromatische Ring kann ggf. 1 bis 3 weitere Ringe, insbesondere Cycloalkylringe, heterocyclische Ringe oder Heteroarylringe, umfassen, die mit dem Ring verschmolzen sind. Im Rahmen der vorliegenden Erfindung weist die Arylgruppe vorzugsweise 5 bis 24 Kohlenstoffatome auf. Beispiele bevorzugter Arylgruppen umfassen Phenyl, Biphenylyl, Biphenylenyl, 5- oder 6-Tetralinyl, 1-, 2-, 3-, 4-, 5-, 6-, 7- oder 8-Azulenyl, 1- oder 2-Naphthyl, 1-, 2- oder 3-Indenyl, 1-, 2- oder 9-Anthryl, 1- 2-, 3-, 4- oder 5-Acenaphtylenyl, 3-, 4- oder 5-Acenaphtenyl, 1-, 2-, 3-, 4- oder 10-Phenanthryl, 1- oder 2-Pentalenyl, 1, 2-, 3- oder 4-Fluorenyl, 4- oder 5-Indanyl, 5-, 6-, 7- oder 8-Tetrahydronaphthyl, 1,2,3,4-Tetrahydronaphthyl, 1,4-Dihydronaphthyl, Dibenzo[a,d]cylcoheptenyl, 1 -, 2-, 3-, 4- oder 5-Pyrenyl, Der Ausdruck "C₅-C₂₄-Aryl", so wie er hierin verwendet wird, steht für eine Arylgruppe mit 5, 6, 7, 8, 9, 10, 11, 12, 13, 14, 15, 16, 17, 18, 19, 20, 21, 22, 23 oder 24 Kohlenstoffatomen.

Die Bezeichnung "Heteroaryl", selber oder als Teil eines anderen Substituenten, steht für 5 bis 12 Kohlenstoff-umfassende, aromatische Ringe oder Ringsysteme, die 1 bis 3 Ringe umfassen, die miteinander verschmolzen oder kovalent miteinander verbunden sind und vorzugsweise 5 bis 8 Atome umfassen. Dabei ist wenigstens einer der Ringe aromatisch, wobei ein oder mehrere Kohlenstoffatome in einem oder mehreren dieser Ringe durch Sauerstoff, Stickstoff oder Schwefelatome ersetzt sein kann, wobei die Stickstoff- oder Schwefelheteroatome ggf. oxidiert sein können und die Stickstoffatome ggf. quaternisiert sein können. Derartige Ringe können mit einem Aryl-, Cycloalkyl-, Heteroaryl- oder Heterocyclylring verschmolzen sein.

Die Bezeichnung "Hydroxyalkyl" steht für eine Gruppe -R^{b}-OH, bei welcher R^{b} ein Alkylen ist, wie es zuvor definiert wurde.

Die Bezeichnung "Amino" steht für eine Gruppe -NH₂.

Die Bezeichnung "Alkylamino" steht für eine Gruppe -N(R^{e})(R^{f}), wobei R^{e} und R^{f}, jeweils unabhängig voneinander, Wasserstoff oder eine Alkylgruppe sind, die ggf. mit C₁-C₂₀-Alkyl, C₂-C₂₀-Alkenyl, C₂-C₂₀-Alkinyl, C₅-C₂₄-Aryl, Hydroxyl, Carboxyl, Nitro, Amino, Furyl, Furylalkyl, Alkylfuryl, Hydroxyalkylfurylalkyl, Isocyanat, Formyl, Halogencarbonyl, Thiol und/oder Alkylthio substituiert sein können.

Die Bezeichnung "Aminoalkyl" steht für eine Gruppe -R^{b}-NH₂. wobei R^{b} ein Alkylen ist, wie es zuvor definiert wurde, das ggf, mit C₁-C₂₀-Alkyl, C₂-C₂₀-Alkenyl, C₂-C₂₀-Alkinyl, C₅-C₂₄-Aryl, Hydroxyl, Carboxyl, Nitro, Amino, Furyl, Furylalkyl, Alkylfuryl, Hydroxyalkylfurylalkyl, Isocyanat, Formyl, Halogencarbonyl, Thiol und/oder Alkylthio substituiert sein kann,

Die Bezeichnung "Alkylaminoalkyl" steht für eine Gruppe -R^{b}-N(R^{e})(R^{f}), wobei R^{b} ein Alkylen ist, wie es zuvor definiert wurde, das ggf. mit C₁-C₂₀-Alkyl, C₂-C₂₀-Alkenyl, C₂-C₂₀-Alkinyl, C₅-C₂₄-Aryl, Hydroxyl, Carboxyl, Nitro, Amino, Furyl, Furylalkyl, Alkylfuryl, Hydroxyalkylfurylalkyl, Isocyanat, Formyl, Halogencarbonyl, Thiol und/oder Alkylthio substituiert sein kann, und wobei R^{e} und R^{f}, jeweils unabhängig voneinander, Wasserstoff oder eine Alkylgruppe sind, die ggf. mit C₁-C₂₀-Alkyl, C₂-C₂₀-Alkenyl, C₂-C₂₀-Alkinyl, C₆-C₂₄-Aryl, Hydroxyl, Carboxyl, Nitro, Amino, Furyl, Furylalkyl, Alkylfuryl, Hydroxyalkylfurylalkyl, Isocyanat, Formyl, Halogencarbonyl, Thiol und/oder Alkylthio substituiert sein können.

Die Bezeichnung "Carboxy" entspricht der Bezeichnung "Hydroxycarbonyl" und steht für eine Gruppe -CO₂H. Die Bezeichnung "Alkylcarboxy" entspricht der Bezeichnung "Alkyloxycarbonyl" und steht für eine Gruppe -CO₂-R^{a}, wobei R^{a} ein Alkyl ist, das ggf. mit C₁-C₂₀-Alkyl, C₂-C₂₀-Alkenyl, C₂-C₂₀-Alkinyl, C₅-C₂₄-Aryl, Hydroxyl, Carboxyl, Nitro, Amino, Furyl, Furylalkyl, Alkylfuryl, Hydroxyalkylfurylalkyl, Isocyanat, Formyl, Halogencarbonyl, Thiol und/oder Alkylthio substituiert sein kann. Die Bezeichnung "Alkenylcarboxy" entspricht der Bezeichnung "Alkenyloxycarbonyl" und steht für eine Gruppe -CO₂-R^{c}, wobei R^{c} ein Alkenyl ist, das ggf. mit C₁-C₂₀-Alkyl, C₂-C₂₀-Alkenyl, C₂-C₂₀-Alkinyl, C₅-C₂₄-Aryl, Hydroxyl, Carboxyl, Nitro, Amino, Furyl, Furylalkyl, Alkylfuryl, Hydroxyalkylfurylalkyl, Isocyanat, Formyl, Halogencarbonyl, Thiol und/oder Alkylthio substituiert sein kann.

Die Bezeichnung "Carboxyaldehyd" oder "Formyl" steht für die Gruppe C(=O)H.

Die Bezeichnung "Furyl" steht für eine Gruppe, die durch die Formel (III) dargestellt wird:

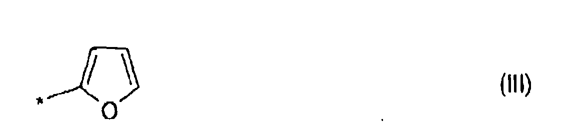

Sternchen (*) werden hierin verwendet, um die Position anzugeben, an welcher das dargestellte Radikal an die Struktur gebunden ist, auf die es sich bezieht und zu der es gehört.

Die Bezeichnung "Furylalkyl" steht für eine Gruppe -R^{b}-Furyl, wobei Furyl wie zuvor definiert ist und R^{b} ein Alkylen ist, wie es zuvor definiert wurde, das ggf. mit C₁-C₂₀-Alkyl, C₂-C₂₀-Alkenyl, C₂-C₂₀-Alkinyl, C₅-C₂₄-Aryl, Hydroxyl, Carboxyl, Nitro, Amino, Furyl, Furylalkyl, Alkylfuryl, Hydroxyalkylfurylalkyl, Isocyanat, Formyl, Halogencarbonyl, Thiol und/oder Alkylthio substituiert sein kann.

Die Bezeichnung "Hydroxyalkylfurylalkyl" steht für eine Gruppe -R^{b}-Furyl-R^{b}-OH, wobei Furyl wie zuvor definiert ist und R^{b} ein Alkylen ist, wie es zuvor definiert wurde.

Die Bezeichnung "Alkylfuryl" steht für eine Gruppe -Furyl-R^{b}, wobei Furyl wie zuvor definiert ist und R^{b} ein Alkylen ist, wie es zuvor definiert wurde, das ggf. mit C₁-C₂₀-Alkyl, C₂-C₂₀-Alkenyl, C₂-C₂₀-Alkinyl, C₅-C₂₄-Aryl, Hydroxyl, Carboxyl, Nitro, Amino, Furyl, Furylalkyl, Alkylfuryl, Hydroxyalkyfurylalkyl, Isocyanat, Formyl, Halogencarbonyl, Thiol und/oder Alkylthio substituiert sein kann.

Die Bezeichnung "Alkoxy" oder "Alkyloxy" steht für eine Gruppe -O-R^{a}, wobei R^{a} ein Alkyl ist, das ggf. mit C₁-C₂₀-Alkyl, C₂-C₂₀-Alkenyl, C₂-C₂₀-Alkinyl, C₅-C₂₄-Aryl, Hydroxyl, Carboxyl, Nitro, Amino, Furyl, Furylalkyl, Alkylfuryl, Hydroxyalkylfurylalkyl, Isocyanat, Formyl, Halogencarbonyl, Thiol und/oder Alkylthio substituiert sein kann.

Die Bezeichnung "Alkoxyalkyl" oder "Alkyloxyalkyl" steht für eine Gruppe -R^{b}-O-R^{a}, wobei R^{a} ein Alkyl ist, das ggf, mit C₁-C₂₀-Alkyl, C₂-C₂₀-Alkenyl, C₂-C₂₀-Alkinyl, C₅-C₂₄-Aryl, Hydroxyl, Carboxyl, Nitro, Amino, Furyl, Furylalkyl, Alkylfuryl, Hydroxyalkylfurylalkyl, Isocyanat, Formyl, Halogencarbonyl, Thiol und/oder Alkylthio substituiert sein kann, und wobei R^{b} ein Alkylen ist, wie es zuvor definiert wurde, das ggf. mit C₁-C₂₀-Alkyl, C₂-C₂₀-Alkenyl, C₂-C₂₀-Alkinyl, C₅-C₂₄-Aryl, Hydroxyl, Carboxyl, Nitro, Amino, Furyl, Furylalkyl, Alkylfuryl, Hydroxyalkylfurylalkyl, Isocyanat, Formyl, Halogencarbonyl, Thiol und/oder Alkylthio substituiert sein kann.

Die Bezeichnung "Alkenyloxy" steht für eine Gruppe -O-R^{b}, wobei R^{b} ein Alkylen ist, wie es zuvor definiert wurde, das ggf. mit C₁-C₂₀-Alkyl, C₂-C₂₀-Alkenyl, C₂-C₂₀-Alkinyl, C₅-C₂₄-Aryl, Hydroxyl, Carboxyl, Nitro, Amino, Furyl, Furylalkyl, Alkylfuryl, Hydroxyalkylfurylalkyl, Isocyanat, Formyl, Halogencarbonyl, Thiol und/oder Alkylthio substituiert sein kann. Ein Beispiel ist Vinylether.

Die Bezeichnung "Alkyloxycarbonylalkenyl" steht für eine Gruppe -R^{d}-C(=O)-O-R^{a}, wobei R^{d} ein Alkenylen ist, wie es zuvor definiert wurde, das ggf. mit C₁-C₂₀. Alkyl, C₂-C₂₀-Alkenyl, C₂-C₂₀-Alkinyl, C₅-C₂₄-Aryl, Hydroxyl, Carboxyl, Nitro, Amino, Furyl, Furylalkyl, Alkylfuryl, Hydroxyalkylfurylalkyl, Isocyanat, Formyl, Halogencarbonyl, Thiol und/oder Alkylthio substituiert sein kann, und wobei R^{a} ein Alkyl ist, das ggf. mit C₁-C₂₀-Alkyl, C₂-C₂₀-Alkenyl, C₂-C₂₀-Alkinyl, C₅-C₂₄-Aryl, Hydroxyl, Carboxyl, Nitro, Amino, Furyl, Furylalkyl, Alkylfuryl, Hydroxyalkylfurylalkyl, Isocyanat, Formyl, Halogencarbonyl, Thiol und/oder Alkylthio substituiert sein kann.

Die Bezeichnung "Oxiranyl" steht für eine Epoxygruppe -C₂H₃O.

Die Bezeichnung "Alkylcarbonyl" steht für eine Gruppe -G(=O)R^{a}, wobei R^{a} ein Alkyl ist, das ggf. mit C₁-C₂₀-Alkyl, C₂-C₂₀-Alkenyl, C₂-C₂₀-Alkinyl, C₅-C₂₄-Aryl, Hydroxyl, Carboxyl, Nitro, Amino, Furyl, Furylalkyl, Alkylfuryl, Hydroxyalkylfurylalkyl, Isocyanat, Formyl, Halogencarbonyl, Thiol und/oder Alkylthio substituiert sein kann. Bevorzugte Beispiele umfassen Acetyl, Propionyl, Butyryl, Valeryl und Pivaloyl.

Die Bezeichnung "Alkenylcarbonyl" steht für eine Gruppe -C(=O)R^{c}, wobei R^{c} ein Alkenyl ist, das ggf. mit C₁-C₂₀-Alkyl, C₂-C₂₀-Alkonyl, C₂-C₂₀-Alkinyl, C₅-C₂₄-Aryl, Hydroxyl, Carboxyl, Nitro, Amino, Furyl, Furylalkyl, Alkylfuryl, Hydroxyalkylfurylalkyl, Isocyanat, Formyl, Halogencarbonyl, Thiol und/oder Alkylthio substituiert sein kann. Ein bevorzugtes Beispiel ist Vinylketon.

Die Bezeichnung "Alkylcarbonyloxyalkyl" steht für eine Gruppe -R^{b}-O-C(=O)R^{a}, wobei R^{b} ein Alkylen ist, wie es zuvor definiert wurde, das ggf. mit C₁-C₂₀-Alkyl, C₂-C₂₀-Alkenyl, C₂-C₂₀-Alkinyl, C₅-C₂₄-Aryl, Hydroxyl, Carboxyl, Nitro, Amino, Furyl, Furylalkyl, Alkylfuryl, Hydroxyalkylfurylalkyl, Isocyanat, Formyl, Halogencarbonyl, Thiol und/oder Alkylthio substituiert sein kann, und R^{a} ein Alkyl ist, das ggf. mit C₁-C₂₀-Alkyl, C₂-C₂₀-Alkenyl, C₂-C₂₀-Alkinyl, C₅-C₂₄-Aryl, Hydroxyl, Carboxyl, Nitro, Amino, Furyl, Furylalkyl, Alkylfuryl, Hydroxyalkylfurylalkyl, Isocyanat, Formyl, Halogencarbonyl, Thiol und/oder Alkylthio substituiert sein kann.

Die Bezeichnung "Alkenylcarbonyloxyalkyl" steht für eine Gruppe -R^{b}-O-C(=O)R^{c}, wobei R^{b} ein Alkylen ist, wie es zuvor definiert wurde, das ggf. mit C₁-C₂₀-Alkyl, C₂-C₂₀-Alkenyl, C₂-C₂₀-Alkinyl, C₅-C₂₄-Aryl, Hydroxyl, Carboxyl, Nitro, Amino, Furyl, Furylalkyl, Alkylfuryl, Hydroxyalkylfurylalkyl, Isocyanat, Formyl, Halogencarbonyl, Thiol und/oder Alkylthio substituiert sein kann, und R^{o} ein Alkenyl ist, das ggf. mit C₁-C₂₀-Alkyl, C₂-C₂₀-Alkenyl, C₂-C₂₀-Alkinyl, C₅-C₂₄-Aryl, Hydroxyl, Carboxyl, Nitro, Amino, Furyl, Furylalkyl, Alkylfuryl, Hydroxyalkylfurylalkyl, Isocyanat, Formyl, Halogencarbonyl, Thiol und/oder Alkylthio substituiert sein kann.

Die Bezeichnung "Alkylcarbonyloxyalkenyl" steht für eine Gruppe -R^{d}-O-C(=O)R^{a}, wobei R^{d} ein Alkenylen ist, wie es zuvor definiert wurde, das ggf. mit C₁-C₂₀-Alkyl, C₂-C₂₀-Alkenyl, C₂-C₂₀-Alkinyl, C₅-C₂₄-Aryl, Hydroxyl, Carboxyl, Nitro, Amino, Furyl, Furylalkyl, Alkylfuryl, Hydroxyalkylfurylalkyl, Isocyanat, Formyl, Halogencarbonyl, Thiol und/oder Alkylthio substituiert sein kann, und R^{a} ein Alkyl ist, das ggf. mit C₁-C₂₀-Alkyl, C₂-C₂₀-Alkenyl, C₂-C₂₀-Alkinyl, C₅-C₂₄-Aryl, Hydroxyl, Carboxyl, Nitro, Amino, Furyl, Furylalkyl, Alkylfuryl, Hydroxyalkylfurylalkyl, isocyanat, Formyl, Halogencarbonyl, Thiol und/oder Alkylthio substituiert sein kann.

Die Bezeichnung "isocyanat" steht für eine Gruppe -N=C=O. Die Bezeichnung "Isocyanat-alkyl" steht für eine Gruppe -R^{a}-Isocyanat, wobei R^{a} ein Alkylen ist, das ggf. mit C₁-C₂₀-Alkyl, C₂-C₂₀-Alkenyl, C₂-C₂₀-Alkinyl, C₅-C₂₄-Aryl, Hydroxyl, Carboxyl, Nitro, Amino, Furyl, Furylalkyl, Alkylfuryl, Hydroxyalkylfurylalkyl, Isocyanat, Formyl, Halogencarbonyl, Thiol und/oder Alkylthio substituiert sein kann.

Die Bezeichnung "Nitro" steht für eine Gruppe -NO₂.

Die Bezeichnung "Cyano" steht für eine Gruppe -CN. Die Bezeichnung "Imino" steht für eine Gruppe C(=NH)R⁹, wobei R⁹ ein Alkyl, Alkylen oder Aryl ist, das ggf. mit C₁-C₂₀-Alkyl, C₂-C₂₀-Alkenyl, C₂-C₂₀-Alkinyl, C₅-C₂₄-Aryl, Hydroxyl, Carboxyl, Nitro, Amino, Furyl, Furylalkyl, Alkylfuryl, Hydroxyalkylfurylalkyl, Isocyanat, Formyl, Halogencarbonyl, Thiol und/oder Alkylthio substituiert sein kann.

Die Bezeichnung "Thiol" oder "Sulfhydryl" steht für eine Gruppe -SH.

Die Bezeichnung "Alkylthlol" steht für eine Gruppe -SR^{a}, wobei R^{a} ein Alkyl ist, das ggf. mit C₁-C₂₀-Alkyl, C₂-C₂₀-Alkenyl, C₂-C₂₀-Alkinyl, C₈-C₂₄-Aryl, Hydroxyl, Carboxyl, Nitro, Amino, Furyl, Furylalkyl, Alkylfuryl, Hydroxyalkylfurylalkyl, Isocyanat, Formyl, Halogencarbonyl, Thiol und/oder Alkylthio substituiert sein kann. Diese Bezeichnung schließt insbesondere eine Gruppe ein, die aus einem Schwefelatom besteht, das mit einer Alkylgruppe verbunden ist. Bevorzugte Beispiele umfassen Methylthio (SCH₃), Ethylthio (SCH₂CH₃), n-Propylthio, Isopropylthio, n-Butylthio, Isobutylthio, sec-Butylthio, tert-Butylthio und n-Hexylthio.

Die Bezeichnung "Thioalkyl" steht für eine Gruppe -R^{b}-SH, wobei R^{b} ein Alkylen ist, wie es zuvor definiert wurde, das ggf. mit C₁-C₂₀-Alkyl, C₂-C₂₀-Alkenyl, C₂-C₂₀-Alkinyl, C₅-C₂₄-Aryl, Hydroxyl, Carboxyl, Nitro, Amino, Furyl, Furylalkyl, Alkylfuryl, Hydroxyalkylfurylalkyl, Isocyanat, Formyl, Halogencarbonyl, Thiol und/oder Alkylthio substituiert sein kann.

Die Bezeichnung "Alkylthioalkyl" steht für eine Gruppe -R^{b}-SR^{a}, wobei R^{b} ein Alkylen ist, wie es zuvor definiert wurde, das ggf. mit C₁-C₂₀-Alkyl, C₂-C₂₀-Alkenyl, C₂-C₂₀-Alkinyl, C₆-C₂₄-Aryl, Hydroxyl, Carboxyl, Nitro, Amino, Furyl, Furylalkyl, Alkylfuryl, Hydroxyalkylfurylalkyl, Isocyanat, Formyl, Halogencarbonyl, Thiol und/oder Alkylthio substituiert sein kann, und wobei R^{a} ein Alkyl ist, das ggf. mit C₁-C₂₀-Alkyl, C₂-C₂₀-Alkenyl, C₂-C₂₀-Alkinyl, C₅-C₂₄-Aryl, Hydroxyl, Carboxyl, Nitro, Amino, Furyl, Furylalkyl, Alkylfuryl, Hydroxyalkylfurylalkyl, Isocyanat, Formyl, Halogencarbonyl, Thiol und/oder Alkylthlo substituiert sein kann.

Die Bezeichnung "Sulfonsäuregruppe" steht für eine Gruppe -S(=O)₂OH.

Die Bezeichnung "Alkylsulfonyl" steht für eine Gruppe -S(=O)₂OR^{a}, wobei R^{a} ein Alkyl ist, das ggf. mit C₁-C₂₀-Alkyl, C₂-C₂₀-Alkenyl, C₂-C₂₀-Alkinyl, C₅-C₂₄-Aryl, Hydroxyl, Carboxyl, Nitro, Amino, Furyl, Furylalkyl, Alkylfuryl, Hydroxyalkylfurylalkyl, Isocyanat, Formyl, Halogencarbonyl, Thiol und/oder Alkylthio substituiert sein kann.

Die Bezeichnung "Halogen" steht für Fluor, Chlor, Brom und/oder Jod.

Die Bezeichnung "Halogenalkyl" steht für einen wie zuvor definierten Alkylrest, bei welchem ein oder mehrere Wasserstoffatome durch ein wie zuvor definiertes Halogen ersetzt wurden. Bevorzugte Beispiele umfassen Chlormethyl, 1-Bromethyl, Fluormethyl, Difluormethyl, Trifluormethyl und 1,1,1-Trifluorethyl.

Die Bezeichnung "Halogenalkenyl" steht für einen wie zuvor definierten Alkenylrest, bei welchem ein oder mehrere Wasserstoffatome durch ein wie zuvor definiertes Halogen ersetzt wurden.

Die Bezeichnung "Halogencarbonyl" steht für eine Gruppe -C(=O)-Hal, wobei Hal für ein wie zuvor definiertes Halogen steht. Bevorzugte Beispiele umfassen Chlorcarbonyl (-C(=O)Cl), Bromcarbonyl (-C(=O)Br) und Fluorcarbonyl (-C(=O)F).

Die Bezeichnung "Halogenaryl" steht für einen wie zuvor definierten Arylrest, bei welchem ein oder mehrere Wasserstoffatome durch ein wie zuvor definiertes Halogen ersetzt wurden.

Immer wenn der Ausdruck "substituiert" in der vorliegenden Erfindung benutzt wird, soll dies darauf hinweisen, dass ein oder mehrere Wasserstoffatome an dem Atom, das in der Bezeichnung angegeben wird, die den Ausdruck "substituiert"` verwendet, durch die angegebene Gruppe ersetzt werden, unter der Voraussetzung, dass die normale Bindigkeit des Atoms nicht überschritten wird und dass die Substitution zu einer chemisch stabilen Verbindung führt, d. h. einer Verbindung, die hinreichend robust ist, um eine Isolation zu einem praktikablen Reinheitsgrad aus der Reaktionsmischung zu überstehen.

Im Rahmen der vorliegenden Erfindung ist der Anteil halogenhaltiger Verbindungen in der polymerisierbaren Zusammensetzung vorzugsweise möglichst gering und ist günstigerweise kleiner 20,0Gew.- bevorzugt kleiner 10,0 Gew.-%, besonders bevorzugt kleiner 5,0 Gew.-%, insbesondere kleiner 1,0 Gew.-%, jeweils bezogen auf das Gesamtgewicht der polymerisierbaren Verbindungen. Im Rahmen einer ganz besonders bevorzugten Ausführungsform der vorliegenden Erfindung enthält die polymerisierbare Zusammensetzung keine halogerthaltigen Verbindungen.

Weiterhin ist auch der Anteil schwefelhaltiger Verbindungen in der polymerisierbaren Zusammensetzung vorzugsweise möglichst gering und ist günstigerweise kleiner 20,0Gew.- bevorzugt kleiner 10,0 Gew.%, besonders bevorzugt kleiner 5,0 Gew.-%, insbesondere kleiner 1,0 Gew.-%, jeweils bezogen auf das Gesamtgewicht der polymerisierbaren Verbindungen. Im Rahmen einer ganz besonders bevorzugten Ausführungsform der vorliegenden Erfindung enthält die polymerisierbare Zusammensetzung keine schwefelhaltigen Verbindungen.

Darüber hinaus ist auch der Anteil stickstoffhaltiger Verbindungen In der polymerisierbaren Zusammensetzung vorzugsweise möglichst gering und ist günstigerweise kleiner 20,0Gew.-%, bevorzugt kleiner 10,0 Gew.-%, besonders bevorzugt kleiner 5,0 Gew.-%, insbesondere kleiner 1,0 Gew.-%, jeweils bezogen auf das Gesamtgewicht der polymerisierbaren Verbindungen. Im Rahmen einer ganz besonders bevorzugten Ausführungsform der vorliegenden Erfindung enthält die polymerisierbare Zusammensetzung keine stickstoffhaltigen Verbindungen.

Gemäß einer ersten besonders bevorzugten Variante der vorliegenden Erfindung ist der Rest R¹⁷ kein Wasserstoff.

Im Rahmen einer bevorzugten Ausführungsform der vorliegenden Erfindung ist das Harz durch Polymerisation einer Zusammensetzung erhältlich, die mindestens eine Verbindung der Formel (I) und/oder der Formel (II) enthält, wobei
- n eine ganze Zahl zwischen 0 und 5 ist,
- t und s, jeweils unabhängig voneinander, eine ganze Zahl zwischen 1 und 5, vorzugsweise 1 oder 2, sind,
- w und z, jeweils unabhängig voneinander, 0 oder 1 sind,
- X und Y, jeweils unabhängig voneinander, 0, S oder N-R²¹ sind,
- R¹ R², R³, R⁴, R⁵, R⁶, R⁷, R⁸, R⁹, R¹⁰, R¹¹, R¹², R¹³, R¹⁴, R¹⁵, R¹⁶, R¹⁸, R¹⁹ und R²¹, jeweils unabhängig voneinander, Wasserstoff, C₁-C₂₀-Alkyl, Carboxyaldehyd, Hydroxyalkyl, Carboxyl, Amino, Nitro, Alkylamino, Aminoalkyl, Alkyloxyalkyl, Alkylaminoalkyl, Alkylcarboxy, Alkenylcarboxy, Furyl, Furylalkyl, Hydroxyalkylfurylalkyl, Alkyloxy, Alkenyloxy, Alkylcarbonylalkenyl, Oxiranyl, Alkenylcarbonyl, Alkylcarbonyloxyalkyl, Alkyloxycarbonylalkenyl, Alkenylcarbonyloxyalkyl, Isocyanat, Isocyanatalkyl, Alkylcarbonyl, Halogencarbonyl, Halogenalkyl, Halogenaryl, Halogenalkenyl, Imino, Thioalkyl, Alkylthioalkyl und/oder Cyano, vorzugsweise Wasserstoff, C₁-C₂₀-Alkyl, Carboxyaldehyd, Hydroxyalkyl, Carboxyl, Alkylamino, Aminoalkyl, Alkylaminoalkyl, Alkyloxy, Alkyloxyalkyl, Furylalkyl, Hydroxyalkylfurylalkyl, Alkenyloxy, Alkycarbonylalkenyl, Alkonylcarbonyl, Alkylcarbonaloxyalkyl, Alkyloxycarbonylalkenyl, Alkenylcarbonyloxyalkyl, Alkylcarboxy, Alkenylcarboxy und/oder Alkylcarbonyl, besonders bevorzugt Wasserstoff, C₁-C₁₀-Alkyl, Carboxyaldehyd, Hydroxyalkyl, Alkylamino, Aminoalkyl, Alkylaminoalkyl, Alkyloxy, Alkyloxyalkyl, Furylalkyl, Hydroxyalkylfurylalkyl, Carboxyl, Alkenyloxy, Alkylcarboxy, Alkenylcarboxy, Alkylcarbonyl, und/oder Alkylencarbonyl, insbesondere Wasserstoff, C₁-C₁₀-Alkyl, Carboxyaldehyd, Hydroxyalkyl, Aminoalkyl, Alkylaminoalkyl, Alkyloxyalkyl, Furylalkyl, Hydroxyalkylfurylalkyl und/oder Carboxyl, sind, wobei jede Gruppe mit C₁C₂₀-Alkyl, C₂-C₂₀-Alkenyl, C₂-C₂₀-Alkinyl, C₅-C₂₄-Aryl, Hydroxyl, Carboxyl, Nitro, Amino, Furyl, Furylalkyl, Alkylfuryl, Hydroxyalkylfurylalkyl, Isocyanat, Formyl, Halogencarbonyl, Thiol und/oder Alkylthio substituiert sein kann,
- R¹⁷ und R²⁰, jeweils unabhängig voneinander, C₁-C₂₀ Alkyl, Carboxaldehyd, Hydroxyalkyl, Carboxyl, Amino, Nitro, Alkylamino, Aminoalkyl, Alkyloxyalkyl, Alkylaminoalkyl, Alkylcarboxy, Alkenylcarboxy, Furyl, Furylalkyl, Hydroxyalkylfurylalkyl, Alkyloxy, Akenyloxy, Akylcarbonylalkanyl, Oxiranyl, Alkenylcarbonyl, Alkylcarbonyloxyalkyl, Alkyloxycarbonylalkenyl, Alkenylcarbonyloxyalkyl, Isocyanat, Isocyanatalkyl und/oder Alkylcarbonyl, vorzugsweise C₁-C₂₀ Alkyl, Carboxaldehyd, Hydroxyalkyl, Carboxyl, Alkylamino, Aminoalkyl, Alkylaminoalkyl, Alkyloxy, Alkyloxyalkyl, Furylalkyl, Hydroxyalkylfurylalkyl, Alkenyloxy, Alkylcarbonylalkenyl, Alkenylcarbonyl, Alkylcarbonyloxyalkyl, Alkyloxycarbonylalkenyl, Alkenylcarbonyloxyalkyl, Alkylcarboxy, Alkenylcarboxy und/oder Alkylcarbonyl, bevorzugt C₁-C₁₀ Alkyl, Carboxaldehyd, Hydroxyalkyl, Alkylamino, Aminoalkyl, Alkylaminoalkyl, Carboxyl, Alkyloxy, Alkyloxyalkyl, Furylalkyl, Hydroxyalkylfurylalkyl, Alkenyloxy, Alkylcarboxy, Alkenylcarboxy, Alkylcarbonyl und/oder Alkenylcarbonyl, insbesondere C₁-C₁₀ Alkyl, Carboxaldehyd, Hydroxyalkyl, Aminoalkyl und/oder Carboxyl, sind, wobei jede Gruppe mit C₁-C₂₀-Alkyl, C₂-C₂₀-Alkenyl, C₂-C₂₀-Alkinyl, C₅-C₂₄-Aryl, Hydroxyl, Carboxyl, Nitro, Amino, Furyl, Furylalkyl, Alkylfuryl, Hydroxyalkylfurylalkyl, Isocyanat, Formyl, Halogencarbonyl, Thiol und/oder Alkylthio substituiert sein kann, und
wobei die gestrichelte Linie eine Doppelbindung darstellt.

Im Rahmen einer weiteren bevorzugten Ausführungsform der vorliegenden Erfindung ist das Harz durch Polymerisation einer Zusammensetzung erhältlich, die eine Verbindung der Formel (I) und/oder der Formel (II) enthält, wobei
- n 0, 1, 2, 3,4 oder 5 ist,
- t und s, jeweils unabhängig voneinander, 1 oder 2 sind,
- w und z, jeweils unabhängig voneinander, 0 oder 1 sind,
- X und Y, jeweils unabhängig voneinander, O, S oder N-R²¹ sind,
- R², R³, R⁴, R⁵, R⁶, R⁷, R⁹, R¹⁰, R¹¹, R¹², R¹³, R¹⁴, R¹⁵, R¹⁶, R¹⁸, R¹⁹, und R²¹, jeweils unabhängig voneinander, Wasserstoff, C₁-C₂ Alkyl, Carboxaldehyd, Hydroxyalkyl, Carboxyl, Aminoalkyl, Alkylaminoalkyl, Hydroxyalkylfurylalkyl, Alkyloxy, Alkyloxyalkyl, Akylcarbonylalkenyl, Alkylcarbonyloxyalkyl, Alkyloxycarbonylalkenyl, Alkenylcarbonyloxyalkyl, Oxiranyl, Isocyanat, Isocyanatalkyl, Alkylcarboxy, Alkenylcarboxy, Alkylcarbonyl, Alkenylcarbonyl, Halogencarbonyl, Halogenalkyl, Halogenaryl, Halogenalkenyl, Imino, Thioalkyl, Alkylthioalkyl, und/oder Cyano, wobei jede Gruppe mit C₁-C₂-Alkyl, C₂-C₄-Alkenyl, C₂-C₄-Alkinyl, Hydroxyl, Carboxyl, Nitro, Amino, Alkylfuryl, Hydroxyalkylfurylalkyl, Isocyanat, Formyl, Halogencarbonyl und/oder Thiol substituiert sein kann,
- R¹, R⁸, R¹⁷ und R²⁰, jeweils unabhängig voneinander, C₁-C₂ Alkyl, Carboxaldehyd, Hydroxyalkyl, Carboxyl, Aminoalkyl, Alkylaminoalkyl, Hydroxyalkylfurylalkyl, Alkyloxy, Alkoxyalkyl, Akylcarbonylalkenyl, Akylcarbonyloxyalkyl, Akyloxycarbonylalkenyl, Akenylcarbonyloxyalkyl, Oxiranyl, Isocyanat, Isocyanatalkyl, Alkylcarboxy, Alkenylcarboxy, Alkylcarbonyl, Alkenylcarbonyl, Halogencarbonyl, Halogenalkyl, Halogenaryl, Halogenalkenyl, Imino, Thioalkyl, Alkylthioalkyl und/oder Cyano, wobei jede Gruppe mit C₁-C₂-Alkyl, C₂-C₂-Alkenyl, C₂-C₄-Alkinyl, Hydroxyl, Carboxyl, Nitro, Amino, Alkylfuryl, Hydroxyalkylfurylalkyl, Isocyanat, Formyl, Halogencarbonyl und/oder Thiol substituiert sein kann, und
wobei die gestrichelte Linie eine Doppelbindung darstellt.

Im Rahmen noch einer weiteren bevorzugten Ausführungsform der vorliegenden Erfindung ist das Harz durch Polymerisation einer Zusammensetzung erhältlich, die eine Verbindung der Formel (I) und/oder der Formel (II) enthält, wobei
- n eine ganze Zahl zwischen 0 und 5 ist,
- t und s, jeweils unabhängig voneinander, 1 oder 2 sind,
- w und z, jeweils unabhängig voneinander, 0 oder 1 sind,
- X und Y, jeweils unabhängig voneinander, 0, S oder N-R²¹ sind,
- R², R³, R⁴, R⁵, R⁶, R⁷, R⁹, R¹⁰, R¹¹, R¹², R¹³, R¹⁴, R¹⁵, R¹⁶, R¹⁸, R¹⁹ und R²¹, jeweils unabhängig voneinander, Wasserstoff, C₁-C₂ Alkyl, Carboxaldehyd, Hydroxyalkyl, Carboxyl, Aminoalkyl, Alkylaminoalkyl, Hydroxyalkylfurylalkyl, Alkoxyalkyl, Oxiranyl und/oder Isocyanat sind,
- R¹, R⁸, R¹⁷ und R²⁰, jeweils unabhängig voneinander, C₁-C₂ Alkyl, Carboxaldehyd, Hydroxyalkyl, Carboxyl, Aminoalkyl, Alkylaminoalkyl, Hydroxyalkylfurylalkyl, Alkoxyalkyl, Oxiranyl und/oder Isocyanat sind, und
wobei die gestrichelte Linie eine Doppelbindung darstellt.

Im Rahmen noch einer weiteren bevorzugten Ausführungsform der vorliegenden Erfindung ist das Harz durch Polymerisation einer,Zusammensetzung erhältlich, die eine Verbindung der Formel (I) und/oder der Formel (II) enthält, wobei
- n 0, 1, 2, 3, 4, 5 ist,
- t 1 oder 2 ist,
- s 1 oder 2 ist,
- w 0 oder 1 ist,
- z 0 oder 1 ist,
- X O, S oder N-R²¹ ist,
- Y O, S oder N-R²¹ ist,
- R¹ Wasserstoff, C₁-C₈ Alkyl, C₂-C₈ Alkenyl, Carboxaldehyd, Hydroxyalkyl, Carboxyl, Formyl, Aminoalkyl, Alkylaminoalkyl, Furylalkyl, Hydroxyalkylfurylalkyl, Alkylcarboxy, Alkenylcarboxy, Alkylcarbonyloxyalkyl, Alkenylcarbonyloxyalkyl, Isocyanat oder Isocyanatalkyl, insbesondere -CH₃,-C₂H₅, -C₃H₇, -C₄H₉, -CH₂=CH, -CH₂OH, -CH₂NH₂, -COOH, -C(=O)H, -NO₂,-C₂H₃O, -CH₂NH₂, -N=C=O, -CH₂-N=C=O, -O-CH=CH₂, -C(=O)OCH₃, - C(=O)OC₂H₅, -CH₂-Furyl-CH₂OH oder -CH₂-O-C(=O)-CH=CH₂ ist,
- R² Wasserstoff, C₁-C₈ Alkyl, C₂-C₈ Alkenyl, Carboxaldehyd, Hydroxyalkyl, Carboxyl, Formyl, Aminoalkyl, Alkylaminoalkyl, Furylalkyl, Hydroxyalkylfurylalkyl, Alkylcarboxy, Alkenylcarboxy, Alkylcarbonyloxyalkyl, Alkenylcarbonyloxyalkyl, Isocyanat oder Isocyanatalkyl, insbesondere -CH₃, - C₂H₅, -C₃H₇, -C₄H₉, -CH₂=CH, -CH₂OH, -CH₂NH₂, -COOH, -C(=O)H, -NO₂, - C₂H₃O, -CH₂NH₂, N=C=O, -CH₂-N=C=O, -O-CH=CH₂, -C(=O)OCH₃, - C(=O)OC₂H₅, -CH₂-Furyl-CH₂OH oder -CH₂-O-C(=O)-CH=CH₂ ist,
- R³ Wasserstoff, C₁-C₈ Alkyl, C₂-C₈ Alkenyl, Carboxaldehyd, Hydroxyalkyl, Carboxyl, Formyl, Aminoalkyl, Alkylaminoalkyl, Furylalkyl, Hydroxyalkylfurylalkyl, Alkylcarboxy, Alkenylcarboxy, Alkylcarbonyloxyalkyl, Alkenylcarbonyloxyalkyl, Isocyanat oder Isocyanatalkyl, insbesondere -CH₃, - C₂H₆, -C₃H₇, -C₄H₉, -CH₂=CH, -CH₂OH, -CH₂NH₂, -COOH, -C(=O)H, -NO₂, - C₂H₃O, -CH₂NH₂, -N=C=O, -CH₂-N=C=O, -O-CH=CH₂, -C(=O)OCH₃, - C(=O)OC₂H₅, -CH₂-Furyl-CH₂OH oder -CH₂-O-C(=O)-CH=CH₂ ist,
- R⁴ Wasserstoff, C₁-C₈ Alkyl, C₂-C₈ Alkenyl, Carboxaldehyd, Hydroxyalkyl, Carboxyl, Formyl, Aminoalkyl, Alkylaminoalkyl, Furylalkyl, Hydroxyalkylfurylalkyl, Alkylcarboxy, Alkenylcarboxy, Alkylcarbonyloxyalkyl, Alkonylcarbonyloxyalkyl, Isocyanat oder Isocyanatalkyl, insbesondere -CH₃, - C₂H₆, -C₃H₇, -C₄H₉, -CH₂=CH, -CH₂OH, -CH₂NH₂, -COOH, -C(=O)H, -NO₂, - C₂H₃O, -CH₂NH₂, -N=C=O, -CH₂-N=C=O, -O-CH=CH₂, -C(=O)OCH₃, - C(=O)OC₂H₅, -CH₂-Furyl-CH₂OH oder -CH₂-O-C(=O)-CH=CH₂ ist,
- R⁵ Wasserstoff, C₁-C₈ Alkyl, C₂-C₈ Alkenyl, Carboxaldehyd, Hydroxyalkyl, Carboxyl, Formyl, Aminoalkyl, Alkylaminoalkyl, Furylalkyl, Hydroxyalkylfurylalkyl, Alkylcarboxy, Alkenylcarboxy, Alkylcarbonyloxyalkyl, Alkenylcarbonyloxyalkyl, Isocyanat oder Isocyanatalkyl, insbesondere -CH₃,-C₂H₅, -C₃H₇, -C₄H₉, -CH₂=CH, -CH₂OH, -CH₂NH₂, -COOH, -C(=O)H, -NO₂, - C₂H₃O, -CH₂NH₂, -N=C=O, -CH₂-N=O=O, O-CH=CH₂, -C(=0)OCHa, - C(=:O)OC₂H₅, -CH₂-Furyl-CH₂OH oder -CH₂-O-C(=O)-CH=CH₂ ist,
- R⁵ Wasserstoff, C₁-C₈ Alkyl, C₂-C₈ Alkenyl, Carboxaldehyd, Hydroxyalkyl, Carboxyl, Formyl, Aminoalkyl, Alkylaminoalkyl, Furylalkyl, Hydroxyalkylfurylalkyl, Alkylcarboxy, Alkenylcarboxy, Alkylcarbonyloxyalkyl, Alkenylcarbonyloxyalkyl, Isocyanat oder Isocyanatalkyl, insbesondere -CH₃, - C₂H₅, -C₃H₇, -C₄H₈, -CH₂=CH, -CH₂OH, -CH₂NH₂, -COOH, -C(=O)H, -NO₂, - C₂H₃0, -CH₂NH₂, -N=C=O, -CH₂-N=C=O, -O-CH=CH₂, -C(=O)OCH₃, - C(=O)OC₂Hₛ, -CH₂-Furyl-CH₂OH oder -CH₂-O-C(=O)-CH=CH₂ Ist,
- R⁷ Wasserstoff, C₁-C₈ Alkyl, Cz-C8 Alkenyl, Carboxaldehyd, Hydroxyalkyl, Carboxyl, Formyl, Aminoalkyl, Alkylaminoalkyl, Furylalkyl, Hydroxyalkylfurylalkyt, Alkylcarboxy, Alkenylcarboxy, Alkylcarbonyloxyalkyl, Alkenylcarbonyloxyalkyl, Isocyanat oder Isocyanatalkyl, insbesondere -CH₃, - C₂H₅, -C₃H₇, -C₄H₉, -CH₂=CH, -CH₂OH, -CH₂NH₂, -COOH, -C(=O)H, -NO₂, - C₂H₃O, -CH₂NH₂, -N=C=O, -CH₂-N=C=O, -O-CH=CH₂, -C(=O)OCH₃, - C(=O)OC₂H₅, -CH₂-Furyl-CH₂OH oder -CH₂-O-C(O)-CH=CH₂ ist,
- R⁸ Wasserstoff, C₁-C₈ Alkyl, C₂-C₈ Alkenyl, Carboxaldehyd, Hydroxyalkyl, Carboxyl, Formyl, Aminoalkyl, Alkylaminoalkyl, Furylalkyl, Hydroxyalkylfurylalkyl, Alkylcarboxy, Alkenylcarboxy, Alkylcarbonyloxyalkyl, Alkenylcarbonyloxyalkyl, Isocyanat oder Isocyanatalkyl, insbesondere -CH₃, - C₂H₅, -C₃H₇, -C₄H₉, -CH₂=CH, -CH₂OH, -CH₂NH₂, -COOH, -C(=O)H, -NO₂, - C₂H₃O, -CH₂NH₂, -N=C=O, -CH₂-N=C=O, -O-CH=CH₂, -C(=O)OCH₃, - C(=O)OC₂H₅, -CH₂-Furyl-CH₂OH oder -CH₂-O-C(=O)-CH=CH₂ ist,
- R⁹ Wasserstoff, C₁-C₈ Alkyl, C₂-C₈ Alkenyl, Carboxaldehyd, Hydroxyalkyl, Carboxyl, Formyl, Aminoalkyl, Alkylaminoalkyl, Furylalkyl, Hydroxyalkylfurylalkyl, Alkylcarboxy, Alkenylcarboxy, Alkylcarbonyloxyalkyl, Alkenylcarbonyloxyalkyl, Isocyanat oder Isocyanatalkyl, insbesondere -CH₃, - C₂H₅, -C₃H₇, -C₄H₉, -CH₂=CH, -CH₂OH, -CH₂NH₂, -COOH, -C(=O)H, -NO₂, - C₂H₃O, -CH₂NH₂, -N=C=O, -CH₂-N=C=O, -O-CH=CH₂, -C(=O)OCH₃, - C(=O)OC₂H₅, -CH₂-Furyl-CH₂OH oder -CH₂-O-C(=O)-CH-CH₂ ist,
- R¹⁰ Wasserstoff, C₁-C₈ Alkyl, C₂-C₈ Alkenyl, Carboxaldehyd, Hydroxyalkyl, Carboxyl, Formyl, Aminoalkyl, Alkylaminoalkyl, Furylalkyl, Hydroxyalkylfurylalkyl, Alkylcarboxy, Alkenylcarboxy, Alkylcarbonyloxyalkyl, Alkonylcarbonyloxyalkyl, Isocyanat oder Isocyanatalkyl, insbesondere -CH₃, - C₂H₅, -C₃H₇, -C₄H₉, -CH₂=CH, -CH₂OH, -CH₂NH₂, -COOH, -C(=O)H, -NO₂, - C₂H₃O, -CH₂NH₂, -N=C=O, -CH₂-N=O=O, -O-CH=CH₂, -C(=O)OCH₃, - C(=O)OC₂H₅, -CH₂-Furyl-CH₂OH oder -CH₂-O-C(=O)-CH=CH₂ ist,
- R¹¹ Wasserstoff, C₁-C₈ Alkyl, C₂-C₈ Alkenyl, Carboxaldehyd, Hydroxyalkyl, Carboxyl, Formyl, Aminoalkyl, Alkylaminoalkyl, Furylalkyl, Hydroxyalkylfurylalkyl, Alkylcarboxy, Alkenylcarboxy, Alkylcarbonyloxyalkyl, Alkenylcarbanyloxyalkyl, Isocyanat oder Isocyanatalkyl, insbesondere -CH₃, - C₂H₅, -C₃H₇, -C₄H₉, -CH₂=CH, -CH₂OH, -CH₂NH₂, -COOH, -C(=O)H, -NO₂, - C₂H₃O, -CH₂NH₂, -N=C=O, -CH₂-N=C=O, -O-CH=CH₂, -C(=O)OCH₃, - C(=O)OC₂H₅, -CH₂-Furyl-CH₂OH oder -CH₂-O-C(=O)-CH=CH₂ ist,
- R¹² Wasserstoff, C₁-C₈ Alkyl, C₂-C₈ Alkenyl, Carboxaldehyd, Hydroxyalkyl, Carboxyl, Formyl, Aminoalkyl, Alkylaminoalkyl, Furylalkyl, Hydroxyalkylfurylalkyl, Alkylcarboxy, Alkenylcarboxy, Alkylcarbonyloxyalkyl, Alkenylcarbonyloxyalkyl, Isocyanat oder Isocyanatalkyl, insbesondere -CH₃, - C₂H₅, -C₃H₇, -C₄H₉, -CH₂=CH, -CH₂OH, -CH₂NH₂, -COOH, -C(=O)H, -NO₂, - C₂H₃O, -CH₂NH₂, -N=C=O, -CH₂-N=C=O, -O-CH=CH₂, -C(=O)OCH₃, - C(=O)OC₂H₅, -CH₂-Furyl-CH₂OH oder CH₂-O-C(=O)-CH=CH₂ ist,
- R¹³ Wasserstoff, C₁-C₈ Alkyl, C₂-C₈ Alkenyl, Carboxaldehyd, Hydroxyalkyl, Carboxyl, Formyl, Aminoalkyl, Alkylaminoalkyl, Furylalkyl, Hydroxyalkylfurylalkyl, Alkylcarboxy, Alkenylcarboxy, Alkylcarbonyloxyalkyl, Alkenylcarbonyloxyalkyl, Isocyanat oder Isocyanatalkyl, insbesondere -CH₃, - C₂H₆, -C₃H₇, -C₄H₉, -CH₂=CH, -CH₂OH, -CH₂NH₂, -COOH, -C(=O)H, -NO₂, - C₂H₃O, -CH₂NH₂, -N=C=O, -CH₂-N=C=O, -O-CH=CH₂, -C(=O)OCH₃, - C(=O)OC₂H₅, -CH₂-Furyl-CH₂OH oder -CH₂-O-C(=O)-CH=CH₂ ist,
- R¹⁴ Wasserstoff, C₁-C₈ Alkyl, C₂-C₈ Alkenyl, Carboxaldahyd, Hydroxyalkyl, Carboxyl, Formyl, Aminoalkyl, Alkylaminoalkyl, Furylalkyl, Hydroxyalkylfurylalkyl, Alkylcarboxy, Alkenylcarboxy, Alkylcarbonyloxyalkyl, Alkenylcarbonyloxyalkyl, Isocyanat oder Isocyanatalkyl, insbesondere -CH₃, - C₂H₅, -C₃H₇, -C₄H₉, -CH₂=CH, -CH₂OH, -CH₂NH₂, -COOH, -C(=O)H, -NO₂, - C₂H₃O, -CH₂NH₂, -N=O=O, -CH₂-N=C=O, -O-CH=CH₂, -C(=O)OCH₃,-C(=O)OC₂H₅, -CH₂-Furyl-CH₂OH oder -CH₂-O-C(=O)-CH=CH₂ ist,
- R¹⁵ Wasserstoff, C₁-C₈ Alkyl, C₂-C₈ Alkenyl, Carboxaldehyd, Hydroxyalkyl, Carboxyl, Formyl, Aminoalkyl, Alkylaminoalkyl, Furylalkyl, Hydroxyalkylfurylalkyl, Alkylcarboxy, Alkenylcarboxy, Alkylcarbonyloxyalkyl, Alkenylcarbonyloxyalkyl, Isocyanat oder Isocyanatalkyl, insbesondere -CH₃, - C₂H₅, -C₃H₇, -C₄H₉. -CH₂=CH, -CH₂OH, -CH₂NH₂, -COOH, -C(=O)H, -NO₂, - C₂H₃O, -CH₂NH₂, -N=C=O, -CH₂-N=C=O, -O-CH=CH₂, -C(=O)OCH₃, - C(=O)OC₂H₅, -CH₂-Furyl-CH₂OH oder -CH₂-O-C(=O)-CH=CH₂ ist,
- R¹⁶ Wasserstoff, C₁-C₈ Alkyl, C₂-C₈ Alkenyl, Carboxaldehyd, Hydroxyalkyl, Carboxyl, Formyl, Aminoalkyl, Alkylaminoalkyl, Furylalkyl, Hydroxyalkylfurylalkyl, Alkylcarboxy, Alkenylcarboxy, Alkylcarbonyloxyalkyl, Alkenylcarbonyloxyalkyl, Isocyanat oder Isocyanatalkyl, insbesondere -CH₃, - C₂H₆, -C-₃H₇, -C₄H₉, CH₂=CH, -CH₂CH, -CH₂NH₂, -COOH, -C(=O)H, -NO₂, - C₂H₃O, -CH₂NH₂, -N=C=O, -CH₂-N=C=O, -O-CH=CH₂, -C(=O)OCH₃, - C(=O)OC₂H₆, -CH₂-Furyl-CH₂OH oder -CH₂-O-C(=O)-CH=CH₂ ist,
- R¹⁷ Wasserstoff, C₁-C₈ Alkyl, C₂-C₈ Alkenyl, Carboxaldehyd, Hydroxyalkyl, Carboxyl, Formyl, Aminoalkyl, Alkylaminoalkyl, Furylalkyl, Hydroxyalkylfurylalkyl, Alkylcarboxy, Alkenylcarboxy, Alkylcarbonyloxyalkyl, Alkenylcarbonyloxyalkyl, Isocyanat oder Isocyanatalkyl, insbesondere -CH₃, - C₂H₅, -C₃H₇, -C₄H₉, -CH₂=CH, -CH₂OH, -CH₂NH₂, -COOH, -C(=O)H, -NO₂, - C₂H₃O, -CH₂NH₂, -N=C=O, -CH₂-N=C=O, -O-CH=CH₂, -C(=O)OCH₃, - C(=O)OC₂H₅, -CH₂-Furyl-CH₂OH oder -CH₂-O-C(=O)-CH=CH₂ ist,
- R¹⁸ Wasserstoff, C₁-C₈ Alkyl, C₂-C₈ Alkenyl, Carboxaldehyd, Hydroxyalkyl, Carboxyl, Formyl, Aminoalkyl, Alkylaminoalkyl, Furylalkyl, Hydroxyalkylfurylalkyl, Alkylcarboxy, Alkenylcarboxy, Alkylcarbonyloxyalkyl, Alkenylcarbonyloxyalkyl, Isocyanat oder Isocyanatalkyl, Insbesondere -CH₃, - C₂H₅, -C₃H₇, -C₄H₉, -CH₂=CH, -CH₂OH, -CH₂NH₂, -COOH, -C(=O)H, -NO₂,-C₂H₃O, -CH₂NH₂, -N=C=O, -CH₂-N=C=O, -O-CH=CH₂, -C(=O)OCH₃, - C(=O)OC₂H₅, -CH₂-Furyl-CH₂OH oder -CH₂-O-C(=O)-CH=CH₂ ist,
- R¹⁹ Wasserstoff, C₁-C₈ Alkyl, C₂-C₈ Alkenyl, Carboxaldehyd, Hydroxyalkyl, Carboxyl, Formyl, Aminoalkyl, Alkylaminoalkyl, Furylalkyl, Hydroxyalkylfurylalkyl, Alkylcarboxy, Alkenylcarboxy, Alkylcarbonyloxyalkyl, Alkenylcarbonyloxyalkyl, Isocyanat oder Isocyanatalkyl, insbesondere -CH₃, - C₂H₅, -C₃H₇, -C₄H₉, -CH₂=CH, -CH₂OH, -CH₂NH₂, -COOH, -C(=O)H, -NO₂, - C₂H₃O, -CH₂NH₂, -N=C=O, -CH₂-N=C-O, -O-CH=CH₂, -C(=O)OCH₃, - C(=O)OC₂H₅, -CH₂-Furyl-CH₂OH oder -CH₂-O-C(=O)-CH-CH₂ ist,
- R²⁰ Wasserstoff, C₁-C₈ Alkyl, C₂-C₈ Alkenyl, Carboxaldehyd, Hydroxyalkyl, Carboxyl, Formyl, Aminoalkyl, Alkylaminoalkyl, Furylalkyl, Hydroxyalkylfurylalkyl, Alkylcarboxy, Alkenylcarboxy, Alkylcarbonyloxyalkyl, Alkenylcarbonyloxyalkyl, Isocyanat oder Isocyanatalkyl, insbesondere -CH₃, - C₂H₅, -C₃H₇, -C₄H₉, -CH₂=CH, -CH₂OH, -CH₂NH₂, -COOH, -C(=O)H, -NO₂, - C₂H₃O, -CH₂NH₂, -N=C=O, -CH₂-N=C=O, -O-CH=CH₂, -C(=O)OCH₃, - C(=O)OC₂H₅, -CH₂-Furyl-CH₂OH oder -CH₂-O-C(=O)-CH=CH₂ ist,
- R²¹ Wasserstoff, C₁-C₈ Alkyl, C₂-C₈ Alkenyl, Carboxaldehyd, Hydroxyalkyl, Carboxyl, Formyl, Aminoalkyl, Alkylaminoalkyl, Furylalkyl, Hydroxyalkylfurylalkyl, Alkylcarboxy, Alkenylcarboxy, Alkylcarbonyloxyalkyl, Alkenylcarbonyloxyalkyl, Isocyanat oder Isocyanatalkyl, insbesondere -CH₃, - C₂H₅, -C₃H₇, -C₄H₉, -CH₂=CH, -CH₂OH, -CH₂NH₂, -COOH, -C(=O)H, -NO₂, - C₂H₃O, -CH₂NH₂, -N=C=O, -CH₂-N=C=O, -O-CH=CH₂, -C(=O)OCH₃, - C(=O)OC₂H₆, -CH₂-Furyl-CH₂OH oder -CH₂-O-C(=O)-CH=CH₂ ist,
- jeder Rest R ggf. mit C₁-C₂₀ Alkyl, C₂-C₂₀ Alkenyl, C₂-C₂₀ Alkinyl, C₅-C₂₄ Aryl, Hydroxyl, Carboxyl, Nitro, Amino, Furyl, Fuylalkyl, Akylfuryl, Hydroxyalkylfurylalkyl, Isocyanat, Formyl, Halogencarbonyl, Thiol und/oder Alkylthio, insbesondere mit C₁-C₂ Alkyl, C₂-C₄ Alkenyl, C₂-C₄ Alkinyl, Hydroxyl, Carboxyl, Nitro, Amino, Alkylfuryl, Hydroxyalkylfurylalkyl, Isocyanat, Formyl, Halogencarbonyl und/oder Thiol, substituiert sein kann, und
wobei die gestrichelte Linie eine Doppelbindung darstellt.

Bevorzugte Monomere für die Herstellung des Harzes umfassen 2,5-Bis(hydroxymethyl)furan, 2,3,5-Tris(hydroxymethyl)furan, 5-Methyl-2-furfurylalkohol, 3-Hydroxymethyl-5-methyl-2-furfurylalkohol, 2,2'-(Hydroxymethyl)difurylmethan, 2,2',3,3'-(Hydroxymethyl)difurylmethan, 2,2',4,4'-(Hydroxymethyl)difurylmethan, 5-Hydroxymethyl-α-(methyl)furfurylalkohol, 5-Hydroxymethyl-2-furancarboxaldehyd, 3,5-Hydroxymethyl-2-furancarboxaldehyd, 4,5-Hydroxymethyl-2-furancarboxaldehyd, 5-Methyl-2-furancarboxaldehyd, 3-Hydroxymethyl-5-methyl-2-furancarboxaldehyd, 5-Nitrofurfuraldehyd, 2,5-Bis(carboxaldehyd)furan, 3-Hydroxymethyl-2,5-bis(carboxaldehyd)furan, 4-Hydroxymethyl-2,5-bis(carboxaldehyd)furan, 5-Hydroxymethyl-2-furansäure, 5-Methyl-2-furansäure, 5-Carboxaldehyd-2-furansäure, 2,5-Furandicarbonsäure, 2,5-Furandisäurechlorid, 2,5-Furandicarbonsäuredimethylester, 5-Hydroxymethyl-2-furfurylamin, 5-Methyl-2-furfurylamin, 5-Carboxaldehyd-2-furfurylamin, 5-Carboxy-2-furfurylamin, 2,5-Bis(aminomethyl)furan, 5-Methyl-2-vinylfuroat, 5-tert.-Butyl-2-vinylfuroat, 5-Methyl-2-vinylfuran, 5-Methyl-2-furfurylidenaceton, 5-Methyl-2-furyloxiran, 5-Methyl-furfurylvinylether, 5-Hydroxymethyl-2-ethylfuranacrylat, Bis-(2,5-lsocyanatmethyl)furan und Bis(2,5-isocyanat)furan sowie Mischungen davon.

In einer bevorzugten Ausführungsform der vorliegende Erfindung umfasst die polymerisierbare Zusammensetzung 2,5-Bis(hydroxymethyl)furan (BHMF). In einer weiteren bevorzugten Ausführungsform der vorliegenden Erfindung umfasst die polymerisierbare Zusammensetzung 2,3,5-Tris(hydroxymethyl)furan (THMF). In einer weiteren bevorzugten Ausführungsform der vorliegenden Erfindung umfasst die polymerisierbare Zusammensetzung 2,2'-Hydroxymethyldifurylmethan (HMDM). In einer weiteren bevorzugten Ausführungsform der vorliegenden Erfindung umfasst die polymerisierbare Zusammensetzung 5-Hydroxymethyl-2-furfurylamin. In einer weiteren bevorzugten Ausführungsform der vorliegenden Erfindung umfasst die polymerisierbare Zusammensetzung 5-Hydroxymethyl-2-furancarboxaldehyd. In einer weiteren bevorzugten Ausführungsform der vorliegenden Erfindung umfasst die polymerisierbare Zusammensetzung 5-Methyl-2-furfurylalkohol. In einer weiteren bevorzugten Ausführungsform der vorliegenden Erfindung umfasst die polymerisierbare Zusammensetzung 5-Hydroxymethyl-α-(methyl)furfurylalkohol. In einer weiteren bevorzugten Ausführungsform der vorliegenden Erfindung umfasst die polymerisierbare Zusammensetzung 2,2,3,3'-(Hydroxymethyl)difurylmethan. In einer weiteren bevorzugten Ausführungsform der vorliegenden Erfindung umfasst die polymerisierbare Zusammensetzung 2,2',4,4'-(Hydroxymethyl)difuryimethan.

In einer weiteren bevorzugten Ausführungsform der vorliegenden Erfindung umfasst die polymerisierbare Zusammensetzung 2,5-Bis(hydroxymethyl)furan (BHMF), 2,3,5-Tris(hydroxymethyl)furan (THMF) und/oder 2,2'-Hydroxymethyldifurylmethan (HMDM).

In einer weiteren bevorzugten Ausführungsform der vorliegenden Erfindung umfasst die polymerisierbare Zusammensetzung 2,5-Bis(hydroxymethyl)furan (BHMF), 2,3,5-Tris(hydroxymethyl)furan (THMF), 2,2'-(Hydroxymethyl)dlfurylmethan (HMDM) und/oder Kondensationsprodukte von BHMF, THMF und/oder HMDM.

Die Bezeichnung "Kondensationsprodukt", so wie sie hierin verwendet wird, steht für eine Verbindung der Formel (IV) 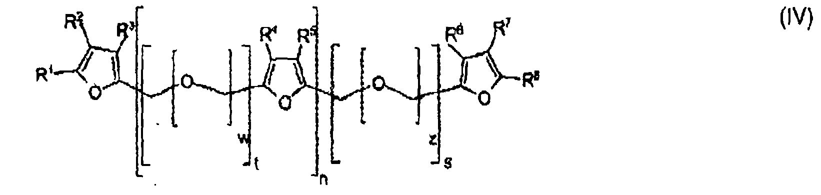 wobei
- n vorzugsweise zwischen 0 und 5, insbesondere 1, 2, 3 oder 4, ist, t 1 oder 2 ist,
- s 1 oder 2 ist,
- w 0 oder 1 ist,
- z 0 oder 1 ist,
- R², R³, R⁴, R^{s}, R⁶, R⁷, jeweils unabhängig voneinander, Wasserstoff, Methyl, ein Hydroxyalkyl oder ein Hydroxyalkylfurylalkyl sind,
- R¹, R⁸, jeweils unabhängig voneinander, Methyl, ein Hydroxyalkyl oder ein Hydroxyalkylfurylalkyl sind.

Bevorzugt sind R², R³, R⁴, R⁵, R⁶, R⁷, jeweils unabhängig voneinander, -H, -CH₃, - CH₂OH oder -CH₂-Furyl-CH₂OH (=Hydroxymethylfurylmethyl) und R¹ und R⁸ sind, jeweils unabhängig voneinander, -CH₃, -CH₂OH oder -CH₂-furyl-CH₂OH.

In einer weiteren bevorzugten Ausführungsform der vorliegenden Erfindung umfasst die polymerisierbare Zusammensetzung eine Verbindung der Formel (I) oder (II), wobei n, t, s, w, z, X, Y, R², R³, R⁴, R⁵, R⁶, R⁷, R⁸, R⁹, R¹⁰, R¹¹, R¹², R¹³, R¹⁴, R¹⁵, R¹⁶, R¹⁷, R¹⁸, R¹⁹, R²⁰, R²¹ wie zuvor definiert sind und wobei die gestrichelte Linie eine Doppelbindung darstellt, unter der Voraussetzung, dass R¹⁷ und R²⁰ keine C₁-C₂₀ Alkylgruppe und vorzugsweise nicht Methyl sind, und/oder unter Voraussetzung, dass die Verbindung nicht 2,5 Dimethylfuran, 2,4 Dimethylfuran, 2-Acetyl-5-methylfuran, 2,5 Dimethyl-3-acetylfuran, 2,3,5-Trimethylfuran, 2-Vinyl-3-methylfuran, 2-Methylbenzofuran, Dimethylbenzofuran, Dibenzofuran, 2,3-Dimethyl-5-ethylfuran, 3,4-Dimethyl-5-ethylfuran, 2-Ethyl-2,3-dihydro-5-methylfuran, 2,5-Tetrahydrodimethylfuran, 2-Methyltetrahydrofuran-3-on, 2,5-Dimethyltetrahydrofuran-3-on, 2-Acetyltetrahydrofuran-3-on, 4-Methyl-2-furansäure, 2-(5-Methylfuryl)-methylketon, 4-Methylfurfural, 5-Methylfurfural, 2-Methyl-3-furfural, 3-Methyl-2-furfural, 5-Hydroxymethyl-2-furfural, Bis furfuryl-2-furan oder 2,5-Difurfuryledine-1-cyclopentanon ist.

Im Rahmen einer weiteren besonders bevorzugten Variante der vorliegenden Erfindung ist der Rest R¹⁷ Wasserstoff.

R¹⁸ und R¹⁹ sind in diesem Zusammenhang, jeweils unabhängig voneinander, günstigerweise Wasserstoff, C₁-C₂₀-Alkyl, Carboxyaldehyd, Hydroxyalkyl, Carboxyl, Amino, Nitro, Alkylamino, Aminoalkyl, Alkyloxyalkyl, Alkylaminoalkyl, Alkylcarboxy, Alkenylcarboxy, Furyl, Furylalkyl, Hydroxyalkylfurylalkyl, Alkyloxy, Alkenyloxy, Alkylcarbonylalkenyl, Oxiranyl, Alkenylcarbonyl, Alkylcarbonyloxyalkyl, Alkyloxycarbonylalkenyl, Alkenylcarbonyloxyalkyl, Isocyanat, Isocyanatalkyl, Alkylcarbonyl, Halogencarbonyl, Halogenalkyl, Halogenaryl, Halogenalkenyl, Imino, Thioalkyl, Alkylthioalkyl und/oder Cyano, vorzugsweise Wasserstoff, C₁-C₂₀-Alkyl, Carboxyaldehyd, Hydroxyalkyl, Carboxyl, Alkylamino, Aminoalkyl, Alkylaminoalkyl, Alkyloxy, Alkyloxyalkyl, Furylalkyl, Hydroxyalkylfurylalkyl, Alkenyloxy, Alkylcarbonylalkenyl, Alkenylcarbonyl, Alkylcarbonaloxyalkyl, Alkyloxycarbonylalkenyl, Alkenylcarbonyloxyalkyl, Alkylcarboxy, Alkenylcarboxy und/oder Alkylcarbonyl, besonders bevorzugt Wasserstoff, C₁-C₁₀-Alkyl, Carboxyaldehyd, Hydroxyalkyl, Alkylamino, Aminoalkyl, Alkylaminoalkyl, Alkyloxy, Alkyloxyalkyl, Furylalkyl, Hydroxyalkylfurylalkyl, Carboxyl, Alkenyloxy, Alkylcarboxy, Alkenylcarboxy, Alkylcarbonyl, und/oder Alkylencarbonyl, insbesondere Wasserstoff, C₁-C₁₀-Alkyl, Carboxyaldehyd, Hydroxyalkyl, Aminoalkyl, Alkylaminoalkyl, Alkyloxyalkyl, Furylalkyl, Hydroxyalkylfurylalkyl und/oder Carboxyl, sind, wobei jede Gruppe mit C₁-C₂₀-Alkyl, C₂-C₂₀-Alkenyl, C₂-C₂₀-Alkinyl, C₅-C₂₄-Aryl, Hydroxyl, Carboxyl, Nitro, Amino, Furyl, Furylalkyl, Alkylfuryl, Hydroxyalkylfurylalkyl, Isocyanat, Formyl, Halogencarbonyl, Thiol und/oder Alkylthio substituiert sein kann. Ganz besonders bevorzugt sind R¹⁸ und R¹⁹, jeweils unabhängig voneinander, Wasserstoff, C₁-C₂ Alkyl, Carboxaldehyd, Hydroxyalkyl, Carboxyl, Aminoalkyl, Alkylaminoalkyl, Hydroxyalkylfurylalkyl, Alkoxyalkyl, Oxiranyl und/oder Isocyanat, Insbesondere Wasserstoff.

R²⁰ ist In diesem Zusammenhang günstigerweise Wasserstoff, C₁-C₂₀-Alkyl, Carboxyaldehyd, Hydroxyalkyl, Carboxyl, Amino, Nitro, Alkylamino, Aminoalkyl, Alkyloxyalkyl, Alkylaminoalkyl, Alkylcarboxy, Alkenylcarboxy, Furyl, Furylalkyl, Hydroxyalkylfurylalkyl, Alkyloxy, Alkenyloxy, Alkylcarbonylalkenyl, Oxiranyl, Alkenylcarbonyl, Alkylcarbonyloxyalkyl, Alkyloxycarbonylalkenyl, Alkenylcarbonyloxyalkyl, Isocyanat, Isocyanatalkyl, Alkylcarbonyl, Halogencarbonyl, Halogenalkyl, Halogenaryl, Halogenalkenyl, Imino, Thioalkyl, Alkylthioalkyl und/oder Cyano, vorzugsweise Wasserstoff, C₁-C₂₀-Alkyl, Carboxyaldehyd, Hydroxyalkyl, Carboxyl, Alkylamino, Aminoalkyl, Alkylaminoalkyl, Alkyloxy, Alkyloxyalkyl, Furylalkyl, Hydroxyalkylfurylalkyl, Alkenyloxy, Alkylcarbonylalkenyl, Alkenylcarbonyl, Alkylcarbonaloxyalkyl, Alkyloxycarbonylalkenyl, Alkenylcarbonyloxyalkyl, Alkylcarboxy, Alkenylcarboxy und/oder Alkylcarbonyl, besonders bevorzugt Wasserstoff, C₁-C₁₀-Alkyl, Carboxyaldehyd, Hydroxyalkyl, Alkylamino, Aminoalkyl, Alkylaminoalkyl, Alkyloxy, Alkyloxyalkyl, Furylalkyl, Hydroxyalkylfurylalkyl, Carboxyl, Alkenyloxy, Alkylcarboxy, Alkenylcarboxy, Alkylcarbonyl, und/oder Alkylencarbonyl, insbesondere Wasserstoff, C₁-C₁₀-Alkyl, Carboxyaldehyd, Hydroxyalkyl, Aminoalkyl, Alkylaminoalkyl, Alkyloxyalkyl, Furylalkyl, Hydroxyalkylfurylalkyl und/oder Carboxyl, sind, wobei jede Gruppe mit C₁-C₂₀-Alkyl, C₂-C₂₀-Alkenyl, C₂-C₂₀-Alkinyl, C₅-C₂₄-Aryl, Hydroxyl, Carboxyl, Nitro, Amino, Furyl, Furylalkyl, Alkylfuryl, Hydroxyalkylfurylalkyl, Isocyanat, Formyl, Halogencarbonyl, Thiol und/oder Alkylthio substituiert sein kann. Ganz besonders bevorzugt ist R²⁰ C₁-C₂ Alkyl, Carboxaldehyd, Hydroxyalkyl, Carboxyl, Aminoalkyl, Alkylaminoalkyl, Hydroxyalkylfurylalkyl, Alkoxyalkyl, Oxiranyl oder Isocyanat, insbesondere Hydroxyalkyl, vor allem CH₂OH.

Die gestrichelte Linie stellt in diesem Zusammenhang vorzugsweise eine Doppelbindung dar.

Im Rahmen einer besonders bevorzugten Ausführungsform der vorliegenden Erfindung enthält die polymerisierbare Zusammensetzung, bezogen auf das Gesamtgewicht der polymerisierbaren Komponenten, mindestens 50,0 Gew.-%, vorzugsweise mindestens 60,0 Gew.-%, bevorzugt mindestens 75,0 Gew.-%, besonders bevorzugt mindestens 90,0 Gew.-%, zweckmäßigerweise mindestens 95,0 Gew.-%, insbesondere 100,0 Gew.-%, Furfurylalkohol, das zweckmäßigerweise aus landwirtschaftlichen Produkten, insbesondere aus Bagasse, Maisstroh oder anderen landwirtschaftlichen Rohstoffen, gewonnen wird.

Bevorzugte Comonomere umfassen in diesem Zusammenhang Verbindungen der Formel (I) oder (II), bei welchen R¹⁷ nicht Wasserstoff ist, insbesondere die vorstehend bereits genannten Verbindungen. Weitere bevorzugte Comonomere schließen Furfural, Formaldehyd, Ketone sowie Phenole ein.

Der Anteil der Comonomere, bezogen auf das Gesamtgewicht der polymerisierbaren Komponenten, ist jedoch vorzugsweise höchstens 50,0 Gew.-%, günstigerweise höchstens 40,0 Gew.-%, bevorzugt höchstens 25,0 Gew.-%, besonders bevorzugt höchstens 10,0 Gew.-%, zweckmäßigerweise höchstens 5,0 Gew.-%. Im Rahmen einer besonders bevorzugten Ausführungsform der vorliegenden Erfindung umfasst die polymerisierbare Zusammensetzung keine Comonomere und enthält nur Furfurylalkohol.

Die Mengen an Verbindungen der Formel und Verbindungen der Formel (I) und/oder (II) können grundsätzlich frei gewählt werden. Vorzugsweise umfasst die polymerisierbare Zusammensetzung jedoch, bezogen auf ihr Gesamtgewicht,
- mehr als 70,0 Gew.-%, bevorzugt mehr als 80,0 Gew.-%, insbesondere mehr als 90,0 Gew.-%, eine oder mehrere Verbindungen der Formel (II),
- 0 bis 30,0 Gew.-%, bevorzugt 0 bis 20,0 Gew.-%, insbesondere 0 bis 10,0 Gew.-%, eine oder mehrere Verbindungen der Formel (I),
- ggf. 0 bis 40,0 Gew.-%, bevorzugt 0 bis 30,0 Gew.-%, Kondensationsprodukte davon.

Gemäß einer besonders bevorzugten Ausführungsform der vorliegenden Erfindung umfasst die polymerisierbare Zusammensetzung, bezogen auf ihr Gesamtgewicht,
- bis zu 70,0 Gew.-%, bevorzugt bis zu 55,0 Cew.-%, insbesondere bis zu 25,0 Gew.-%, 2,5-Bis(hydroxymethyl)furan (BHMF),
- bis zu 20,0 Gew.-%, bevorzugt bis zu 15,0 Gew.-%, insbesondere bis zu 5,0 Gew.-%, 2,3,5-Tris(hydroxymethyl)furan (THMF),
- bis zu 10,0 Gew.-%, bevorzugt bis zu 5,0 Gew.-%, insbesondere bis zu 1,0 Gew.-%, 2,2'-Hydroxymethyldifurylmethan (HMDM).

Die Zusammensetzung kann weiterhin ggf. bis zu 40,0 Gew.-%, bevorzugt bis zu 30,0 Gew.-%, Kondensationsprodukte von BHMF, THMF und/oder HMDM enthalten.

Gemäß einer weiteren bevorzugten Ausführungsform der vorliegenden Erfindung umfasst die polymerisierbare Zusammensetzung, bezogen auf ihr Gesamtgewicht,
- bis zu 60,0 Gew.-%, bevorzugt bis zu 30,0 Gew.-%, einer Verbindung der Formel (I) und/oder (II), wobei n kleiner gleich 5 ist, und
- bis zu 40,0 Gew.-%, bevorzugt bis zu 60,0 Gew.-%, Kondensationsprodukte davon.

Im Rahmen der vorliegenden Erfindung umfasst die polymerisierbare Zusammensetzung vorzugsweise disubstituierte, trisubstituierte oder polysubstituierte Furanverbindungen oder eine Mischung davon. Weiterhin kann sie ein Lösungsmittel, einen Katalysator (Initiator), Kupplungsmittel, Füllstoffe, Flammschutzmittel, Öl (Wachs) und/oder ein Tensid enthalten.

In einer bevorzugten Ausführungsform der vorliegenden Erfindung werden die Verbindungen der vorliegenden Zusammensetzung in einem Lösungsmittel verdünnt. Die Konzentration der Verbindungen in dem Lösungsmittel liegt vorzugsweise zwischen 5,0 und 95,0 Gew.-%, bevorzugt zwischen 10,0 Gew.-% und 80,0 Gew.-%, bezogen auf das Gesamtgewicht der Lösung. Beispiele bevorzugter Lösungsmittel umfassen Wasser, Alkohole, insbesondere Ethanol und Methanol, Dioxan, N,N Dimethylformamid, Aceton, Ethylenglykol und Glycerin.

Gemäß einer besonders bevorzugten Ausführungsform der vorliegenden Erfindung ist das Lösungsmittel Wasser. Die Furanverbindungen der vorliegenden Erfindung sind vorzugsweise in Wasser löslich. In einer weiteren bevorzugten Ausführungsform sind die Furanverbindungen der vorliegenden Erfindung in der Gegenwart von einem Katalysator in Wasser löslich. Der Ausdruck "wasserlöslich", so wie er hierin verwendet wird, bezieht sich auf die Menge, die nach Stehenlassen für 48 h in Wasser bei Raumtemperatur löslich ist, wenn 5,0 g Furanverbindungen zu 95,0 g entionisiertem Wasser gegeben werden. Die Prozentzahl der Wasserlöslichkeit kann durch die Formel berechnet werden: % Wasserlöslichkeit =100 x (5,0 g Furanverbindungen - Gewicht des wasserunlöslichen Rests) / (5,0 g Furanverbindungen).

In der vorliegenden Erfindung können die Furanverbindungen in der Gegenwart oder in der Abwesenheit von Katalysatoren umgesetzt werden. Die polymerisierbare Zusammensetzung kann daher einen Katalysator enthalten. Bevorzugte Katalysatoren schließen Metallsalze, Ammoniumsalze, organische Säuren, Anhydride, anorganische Säuren sowie Mischungen hiervon ein. Bevorzugte Metallsalze umfassen Metallhalogenide, insbesondere Magnesiumchlorid, Aluminiumchlorid und Zinkchlorid, Metallsulfate, insbesondere Magnesiumsulfat und Aluminiumsulfat, Metallnitrate, insbesondere Magnesiumnitrat, Aluminiumnitrat und Zinknitrat, Metallphosphate sowie Mischungen hiervon. Bevorzugte Ammoniumsalze umfassen Ammoniumchlorid, Ammoniumsulfat, Ammoniumphosphat, Ammoniumcarbonat, Ammoniumbicarbonat, Ammoniumaxalat, Ammoniumcitrat, Ammoniumnitrat, Ammoniumfumarat, Ammoniumlevulinat sowie Mischungen hiervon. Bevorzugte organische oder anorganische Säuren umfassen Ameisensäure, Essigsäure, Propionsäure, Buttersäure, Pentansäure, Hexansäure, Oxalsäure, Maleinsäure, Maleinsäureanhydrid, Adipinsäure, Zitronensäure, Furoesäure, Benzoesäure, Phthalsäureanhydrid, para-Totuolsulfonsäure, Salzsäure, Schwefelsäure, Salpetersäure, Phosphorsäure, Borsäure, Kieselsäure, Benzoylperoxid sowie Mischungen hiervon.

Abhängig vom Katalysator und der Aushärtetemperatur und den gewünschten Eigenschaften umfasst die Zusammensetzung vorzugsweise bis zu 20 Gew.%

(oder mehr), bevorzugt im Bereich von 1,0 Gew.-% bis 15,0 Gew.-%, besonders bevorzugt im Bereich von 8,0 Gew.-% bis 10,0 Gew.% , günstigerweise im Bereich von 5,0 Gew.% bis 8,0 Gew.% , insbesondere 5,0 Gew.%, Katalysator, jeweils bezogen auf die Gesamtmenge der (getrockneten) Furanverbindungen in der Zusammensetzung.

In einer weiteren bevorzugten Ausführungsform der vorliegenden Erfindung werden die Furanverbindungen, insbesondere 2,5-Bis(hydroxymethyl)furan (BHMF), 2,3,5-Tris(hydroxymethyl)furan (THMF), 2,2'-(Hydroxymethyl)difurylmethan, (HMDM), Kondensationsprodukte davon, 2,2',3,3'-(Hydroxymethyl)difurylmethan, 2,2',4, 4'-(Hydroxymethyl)difurylmethan, durch Hydroxymethylierung von Furfurylalkohol mit einer Formaldehydquelle, insbesondere mit Formaldehyd, Paraformaldehyd oder Trioxan, erhalten.

Die Bildung des Furanharzes erfolgt vorzugsweise säurekatalysiert gemäß der allgemeinen Reaktionsgleichung 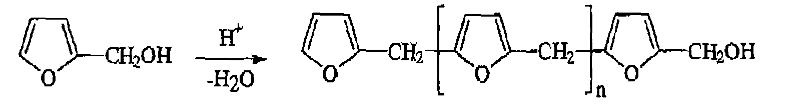 wobei nur die Polykondensation von Furfurylalkohol dargestellt wurde und eventuelle Comonomere der Übersichtlichkeit halber nicht berücksichtigt wurden.

Die Vernetzung des Furanharzes erfolgt vorzugsweise primär durch Kondensation einer endständigen Methylolgruppe in einem Oligomer oder Polymer mit einer Methylengruppe einer anderen Kette; vorzugsweise wiederum unter Säurekatalyse:

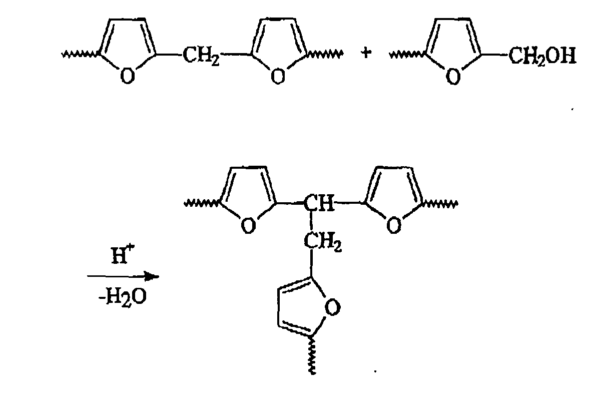

Auch in diesem Zusammenhang werden eventuelle Comonomere oder Substituenten der Übersichtlichkeit halber nicht dargestellt.

Weiterhin ist auch eine Vernetzung durch eine Addition einer endständigen Methylolgruppe in einem Oligomer oder Polymer an eine Doppelbindung einer anderen Kette möglich, wenn auch im Rahmen der vorliegenden Erfindung weniger bevorzugt.

Geeignete Säuren für die Katalyse der Polymerisation und/oder der Vernetzung schließen anorganische und organische Säuren, insbesondere organische Säuren, ein. Starke Säuren, insbesondere Toluolsulfonsäure, Xylolsulfonsäure, Benzolsulfonsäure, Salzsäure und Schwefelsäure, werden in diesem Zusammenhang besonders bevorzugt. Dabei hat sich eine Mischung aus Toluolsulfonsäure und Benzolsulfonsäure ganz besonders bewährt.

Im Rahmen einer weiteren bevorzugten Ausführungsform der vorliegenden Erfindung wird eine schwache Säure, insbesondere Phosphorsäure, verwendet, die vorzugsweise eine längere Topfzeit bedingt und vorzugsweise eine Aushärtung des Harzes bei einer Temperatur im Bereich von 100°C bis 200°C erfordert.

Die Säuremenge kann in diesem Zusammenhang prinzipiell frei gewählt werden. Sie liegt vorzugsweise im Bereich von 1,0 bis 45,0 Gew.-%, bevorzugt im Bereich von 10,0 Gew.% bis 40,0 Gew.%, insbesondere im Bereich von 15,0 Gew.% bis 35,0 Gew.%, jeweils bezogen auf das Gesamtgewicht aus Furanharz-Monomeren und Oligomeren sowie Säurekatalysator.

Im Rahmen der vorliegenden Erfindung besonders geeignete Furanharze zeigen einen Peak im DSC-Diagramm (DSC = Differential Scanning Calorimetry) im Bereich von 120°C bis 160°C, bevorzugt im Bereich von 130°C bis 146°C, insbesondere im Bereich von 131°C bis 139°C. Die DSC-Messung erfolgt dabei vorzugsweise mit einer Heizrate von 5°C/Minute.

Für weitere Details zu Furanharzen und ihre Herstellung wird auf die Fachliteratur, insbesondere auf Römpp-Lexikon Chemie; Herausgeber: Jürgen Falbe, Manfred Regitz; bearbeitet von Eckard Amelingmeier; Stuttgart, New York; Thieme; 10. Auflage - 1997; Band 2 Cm-G, Stichwort "Furan-Harze" sowie Ullmann's Encyclopedia of lndustrial Chemistry, Fifth Edition on CD-ROM, 1997, Stichwort "Furan and derivatives - Furfurylalcohol" und die dort angegebenen Fundstellen, verwiesen.

Die Restfeuchte der erfindungsgemäßen Biokompositplatte, bezogen auf ihr Gesamtgewicht, ist kleiner 8,0 Gew.%, bevorzugt kleiner 7,0 Gew.-%, besonders bevorzugt kleiner 6,0 Gew.-&, insbesondere kleiner 5,0 Gew.-%. Sie wird vorzugsweise in Anlehnung an die Norm EN 20287 nach 24 h Trocknung im Trockenschrank bei 105°C, bevorzugt nach 48 h Trocknung im Trockenschrank bei 105°C, ermittelt

Der Gewichtsanteil des Biopolymers, bezogen auf das Gesamtgewicht der Biokompositplatte, beträgt im Rahmen der vorliegenden Erfindung mindestens 20,0 Gew.-% und liegt zweckmäßigerweise im Bereich von 20,0 Gew.-% bis 45,0 Gew.-%, vorzugsweise im Bereich von 25,0 Gew.-% bis 40,0 Gew.-%, mehr bevorzugt im Bereich von 28,0 Gew.-% bis 36,0 Gew.-% und noch mehr bevorzugt im Bereich von 30,0 Gew.-% bis 34,0 Gew.-%.

Das Gewichtsverhältnis von Naturfasern zu Biopolymer ist erfindungsgemäß vorzugsweise im Bereich von 5:1 bis 1:5, insbesondere im Bereich von 4:1 bis 1:1.

Die Herstellung der erfindungsgemäßen Blokompositplatte kann auf an sich bekannte Weise erfolgen.

Die erfindungsgemäße Biokompositplatte wird vorzugsweise dadurch erhalten, dass man einen Aufbau herstellt, der die Papierbögen, bevorzugt Recyclingpapierbögen, ggf. den Dekorpapierbogen, bevorzugt ein Recyclingpapierbogen, und ein geeignetes Bindemittelsystem enthält, diesen Aufbau vorzugsweise zwischen spezielle Pressplatten einbringt, verpresst und das Bindemittelsystem dabei aushärtet

Besonders bewährt hat sich dabei eine Vorgehensweise, bei welcher man
a) mindestens zwei Papierbögen mit einer Zusammensetzung imprägniert, die mindestens eine Verbindung der Formel (I) und/oder der Formel (II) oder ein Präpolymer hiervon umfasst,
b) die Bögen aus Schritt a. übereinander legt und unter Druckerhöhung und Temperaturerhöhung flächig miteinander verpresst,
wobei in Schritt b. vorzugsweise eine Polymerisation und/oder Vernetzung der polymerisierbaren Zusammensetzung erfolgt.

Obwohl im Rahmen der vorliegenden Beschreibung von "dem" Dekorpapierbogen die Rede ist, versteht der Fachmann, dass, je nach gewünschter Beschaffenheit der Biokompositplatte, auch mehrere Dekorpapierbögen verwendet werden können.

Zum Herstellen des Aufbaus werden einzelne Bögen, bevorzugt sämtliche Bögen, der verschiedenen Schichten vorzugsweise mit einem geeigneten Bindemittel imprägniert.

Gemäß einer bevorzugten Ausführungsform umfasst der Aufbau mehrere Papierbögen, vorzugsweise zwei bis 200 Papierbögen, insbesondere Kraftpapierbögen. Auf dem obersten Paplerbogen ist vorzugsweise ein Dekorpapierbogen angeordnet.

Gemäß einer weiteren bevorzugten Ausführungsform ist der auf dem obersten Papierbogen aufgebrachte Dekorpapierbogen ein Prepreg aus Dekorpapier und einem geeigneten Bindemittel.

Gemäß einer weiteren bevorzugten Ausführungsform sind die im Aufbau vorhandenen Papierbögen vorzugsweise mit einer Zusammensetzung Imprägniert, die, bezogen auf das Gesamtgewicht der polymerisierbaren Komponenten, mindestens 50,0 Gew.% mindestens einer Verbindung der Formel (I) und/oder der Formel (II), insbesondere Furturylalkohol, und/oder Furanharz-Präpolymere auf Basis von Verbindungen der Formel (I) und/oder der Formel (II), insbesondere Furfurylalkohol, sowie vorzugsweise mindestens einen sauren Katalysator enthält. Vorzugsweise handelt es sich dabei um ein wärmehärtendes Harz, welches vorzugsweise bei Temperaturen im Bereich von 70°C bis 200°C, zweckmäßigerweise im Bereich von 100°C bis 180°C, insbesondere im Bereich von 140°C bis 160°C, aushärtet.

Der im Aufbau ggf. vorhandene Dekorpapierbogen ist vorzugsweise ebenfalls mit einer Zusammensetzung imprägniert, die, bezogen auf das Gesamtgewicht der polymerisierbaren Komponenten, mindestens 50,0 Gew.% mindestens einer Verbindung der Formel (I) und/oder der Formel (II), insbesondere Furfurylalkohol, und/oder Furanharz-Präpolymere auf Basis von Verbindungen der Formel (I) und/oder der Formel (II), insbesondere Furfurylalkohol, sowie vorzugsweise einen sauren Katalysator enthält. Vorzugsweise handelt es sich dabei um ein wärmehärtendes Harz, welches vorzugsweise bei Temperaturen im Bereich von 70°C bis 200°C, zweckmäßigerweise im Bereich von 100°C bis 180°C, insbesondere im Bereich von 140°C bis 160°C, aushärtet.

Der Bindemittelgehalt des imprägnierten Dekorbogens hängt unter anderem von dem Motiv des Dekorbogens ab. Bei unifarbenen Dekoren liegt der Bindemittelgehalt des imprägnierten Dekorbogens vorzugsweise im Bereich von 35,0 Gew.-% bis 65,0 Gew.-%, mehr bevorzugt im Bereich von 42,0 Gew.-% bis 60,0 Gew.-% und noch mehr bevorzugt im Bereich von 48,0 Gew.-% bis 55,0 Gew.-%. Bei mehrfarbigen, durch Muster erzeugten oder anderweitig bedruckten Dekormotiven liegt der Bindemittelgehalt des imprägnierten Dekorbogens vorzugsweise im Bereich von 35,0 Gew.% bis 65,0 Gew.-%, mehr bevorzugt im Bereich von 37,0 Gew.% bis 50,0 Gew.% und noch mehr bevorzugt im Bereich von 40,0 Gew.% bis 45,0 Gew.%.

Ein erfindungsgemäß präparierter Aufbau wird anschließend vorzugsweise zwischen zwei Pressplatten eingebracht und verpresst, die vorzugsweise matt, glatt oder strukturiert sind.

Die Verpressung des Aufbaus erfolgt bevorzugt bei einer Temperatur im Bereich von 70°C bis 200°C, besonders bevorzugt im Bereich 120°C bis 160°C, insbesondere im Bereich von 130°C bis 160°C, und bevorzugt bei erhöhtem Druck von vorzugsweise wenigstens 4 N/mm², vorzugsweise wenigstens 5 N/mm² und besonders bevorzugt wenigstens 7 N/mm². Die Presszeit liegt vorzugsweise im Bereich von 40 Minuten bis 90 Minuten, besonders bevorzugt im Bereich von 50 Minuten bis 80 Minuten.

Die gleichzeitige Anwendung von Wärme und hohem Druck ermöglicht das Fließen und anschließende Aushärten der Bindemittel.

Das nach dem Verpressen des Aufbaus und dem Aushärten der Harze erhaltene Produkt wird schließlich als Biokompositplatte bezeichnet.

Die fertige Biokompositplatte weist, je nach gewähltem Aufbau, unterschiedliche Dicken auf. Übliche Dicken liegen im Bereich von 0,5 mm bis 2 mm, vorzugsweise im Bereich von 0,6 mm bis 1,5 mm und besonders bevorzugt im Bereich von 0,8 mm bis 1,2 mm. Es ist allerdings auch möglich, Biokompositplatten mit weitaus größeren Dicken, wie beispielsweise im Bereich von 2 mm bis 40 mm, vorzugsweise im Bereich von 2 mm bis 30 mm und besonders bevorzugt im Bereich von 2 mm bis 20 mm, herzustellen.

Die Dicke der Dekorschicht, sofern vorhanden, liegt vorzugsweise im Bereich von 65 µm bis 200 µm, besonders bevorzugt im Bereich von 80 µm bis 150 µm. Die Dicke der Kemschicht liegt gemäß einer ersten bevorzugten Ausführungsform der vorliegenden Erfindung im Bereich von 250 µm bis 1800 µm, besonders bevorzugt im Bereich von 500 µm bis 1500 µm. Im Rahmen einer weiteren bevorzugten Ausführungsform der vorliegenden Erfindung liegt die Dicke der Kernschicht Im Bereich von 1,7 mm bis 39,7 mm, bevorzugt im Bereich von 1,7 mm bis 29,7 mm, besonders bevorzugt im Bereich von 1,7 mm bis 19,7 mm.

Das Endgewicht der erfindungsgemäßen Biokompositplatte ist von mehreren Faktoren, wie zum Beispiel der Dicke der Biokompositplatte, dem Gewicht der eingesetzten Komponenten und der Anzahl der verwendeten Bögen, abhängig. Gemäß einer ersten bevorzugten Ausführungsform der vorliegenden Erfindung liegt das Gewicht der Biokompositplatte im Bereich von 1,0 kg/m² bis 1,6 kg/m² Oberfläche der Biokompositplatte, besonders bevorzugt im Bereich von 1,3 kg/m² bis 1,5 kg/m², zum Beispiel bei 1,4 kg/m². Gemäß einer weiteren bevorzugten Ausführungsform der vorliegenden Erfindung liegt das Gewicht der Biokompositplatte im Bereich von 2,8 kg/m² bis 56,0 kg/m² Oberfläche der Biokompositplatte, besonders bevorzugt im Bereich von 2,8 kg/m² bis 42 kg/m², insbesondere im Bereich von 2,8 kg/m² bis 28 kg/m².

Die erfindungsgemäße Biokompositplatte wird aufgrund Ihrer hervorragenden Eigenschaften insbesondere für Wandverkleidungen, Arbeitsflächen, Ladeneinrichtungen, Regale, Theken und/oder Möbel eingesetzt. Weiterhin ist auch ihre Verwendung für Bodenbeläge vorteilhaft.

Dementsprechend betrifft die Erfindung unter einem weiteren Aspekt ein Paneel, das einen Träger und eine auf dem Träger haftende erfindungsgemäße Biokompositplatte umfasst. Vorzugsweise handelt es sich bei dem Paneel um eine Wandverkleidung. Ferner kann das Paneel aber auch eine andere Platte, wie zum Beispiel eine Tischplatte oder eine Möbelplatte, sein.

Bevorzugte Träger sind Spanplatten, Sperrholz, Trägerplatten (gegebenenfalls mit Schichtstoff beschichtet), hochverdichtete Faserplatten, mitteldichte Faserplatten, Hartfaserplatten, Tischlerplatten, Furnisrplatten, Massivholz, Waben, Schaumstoffe, Metallplatten, Bleche, mineralische Träger, Natur- und Kunststein, Fliesen und Gipskartonplatten. Die Träger können mit einem geeigneten Bindemittel beschichtet oder unbeschichtet sein. Bevorzugt kommen jedoch wiederum Biopolymere als Bindemittel zum Einsatz.

Die Biokompositplatte kann sowohl auf flüssigkeitsaufnehmende (saugfähige) Träger, wie zum Beispiel unbeschichtete Spanplatten und unbeschichtetes Holz, als auch auf nicht flüssigkeitsaufnehmende (nicht saugfähige) Träger, wie zum Beispiel Metalle, Keramik, Glas, beschichtete Hölzer, beschichtete Spanplatten usw. aufgebracht werden.

Verfahren und Mittel zum festen Verbinden von Biokompositplatte und Träger sind aus dem Stand der Technik bekannt. Beispielsweise kann das feste Verbinden von Blokompositplatte und Träger durch Verkleben oder mit Hilfe von aus dem Stand der Technik bekannten Verbindungselementen erfolgen.

Das Paneel kann zudem weitere aus dem Stand der Technik bekannte Funktionsmaterialien aufweisen. Beispielhaft seien Materialien zum Flammschutz, zur Abschirmung von Strahlung, zur Schalldämpfung, zur Stabilisierung und zur Fsuchtigkeitssperre genannt.

Die Dicke des Paneels ist nicht weiter eingeschränkt. Sie liegt vorzugsweise im Bereich von 7 mm bis 40 mm, besonders bevorzugt im Bereich von 12 mm bis 30 mm und ganz besonders bevorzugt im Bereich von 18 mm bis 28 mm. Die Dicke der in dem Paneel vorhandenen Biokompositplatte kann, wie vorstehend beschrieben, vorzugsweise im Bereich von 0,5 mm bis 2 mm, besonders bevorzugt im Bereich von 0,6 mm bis 1,5 mm und ganz besonders bevorzugt im Bereich von 0,8 mm bis 1,2 mm liegen. Die Dicke des Trägers liegt vorzugsweise im Bereich von 5 mm bis 38 mm, besonders bevorzugt im Bereich von 10 mm bis 28 mm, ganz besonders bevorzugt im Bereich von 16 mm bis 25 mm.

Das Endgewicht des Paneels ist nicht besonders eingeschränkt. Es liegt vorzugsweise im Bereich von 8 kg/m² bis 25 kg/m² Oberfläche des Paneels, besonders bevorzugt im Bereich von 10 kg/m² bis 21 kg/m² und ganz besonders bevorzugt im Bereich von 12 kg/m² bis 18 kg/m².

Die vorliegende Erfindung wird anhand der folgenden Beispiele erläutert, die jedoch nicht als einschränkend zu verstehen sind:

### Ausführungsbeispiel 1

Ein aus Kraftzellstoff bestehendes Recyclingpapier mit einem Flächengewicht von nominell 210 g/m² wurde mit 52% einer etwa 60-65 %-igen Furfurylalkohol-Polymer-Lösung (= Furan-Harz) (incl. Härter, Netz- und Trennmittel) getränkt. Das überschüssige Harz wurde an der Oberfläche zwischen zwei polierten Stahlwalzen entfernt. Das imprägnierte Papier wurde 2 h bei Raumtemperatur antrocknen gelassen und anschließend für 2 Minuten bei 130 °C in einem Umlufttrockenschrank getrocknet, um ein vorimprägniertes Recyclingpapier zu erhalten.

### Herstellung einer erfindungsgemäßen Biokompositplatte

Zur Herstellung einer erfindungsgemäßen Biokompositplatte wurde zunächst ein für das Verpressen mit zwei Pressblechen geeigneter Aufbau hergestellt. Dazu wurden auf 10 Bögen Recyclingpapier, die mit dem Furanharz imprägniert wurden zusammengelegt. Auf den obersten Papierbogen wurde jeweils ein Releasebogen angeordnet. Ein derartiger Aufbau ist in Schema 1 dargestellt.

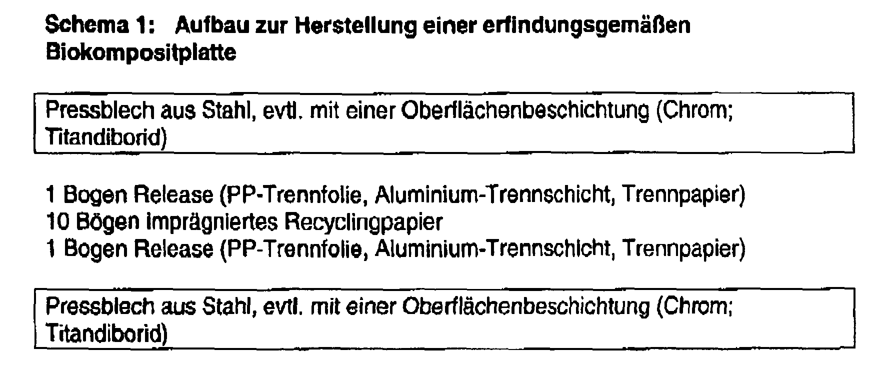

Der derart präparierter Aufbau wurde zwischen zwei Pressblechen als Strukturgeber bei einem Druck von 10 N/mm² und einer Maximaltemperatur von 145°C für 25 min verpresst und anschließend auf Raumtemperatur abgekühlt.

### Ausführungsbeispiel 2

Das In Ausführungsbeispiel 1 hergestellte vorimprägnierte Recyclingpapier wurde zur Herstellung einer erfindungsgemäßen Biokompositplatte verwendet, wobei nun 23 Bögen Recyclingpapier, die mit dem Furanharz imprägniert wurden, miteinander verpresst wurden.

### Ausführungsbeispiel 3

Das in Ausführungsbeispiel 1 hergesteltte vorimprägnierte Recyclingpapier wurde zur Herstellung einer erfindungsgemäßen Biokompositplatte verwendet, wobei nun 28 Bögen Recyclingpapier, die mit dem Furanharz imprägniert wurden, miteinander verpresst wurden.

### Ausführungsbeispiel 4

Das in Ausführungsbeispiel 1 hergestellte vorimprägnierte Recyclingpapier wurde zur Herstellung einer erfindungsgemäßen Biokompositplatte verwendet, wobei nun 48 Bögen Recyclingpapier, die mit dem Furanharz imprägniert wurden miteinander verpresst.

### Ergebnisse

Die in den Ausführungsbeispielen erhaltenen Biokompositplatten wurden auf ihre Festigkeiten untersucht. Die Bestimmung der Dichte erfolgte nach EN ISO 1183-1.

Die mechanischen Festigkeiten wurden gemäß EN ISO 178 in einem Drelpunkt-Biegeversuch ermittelt. Die erhaltenen Werte sind in Tabelle 1 dargestellt:

**Tabelle 1: Prüfergebnisse**

| **Beispiel** | **Plattendicke in mm** | **Biegefestigkeit in N/mm²** **längs / quer** | **E-Modul in N/mm²** **längs / quer** | **Dichte in g/cm³** |
|---|---|---|---|---|
| 1 | 2,22 | 182,2 / 126,5 | 15424 / 9346 | 1,46 |
| 2 | 4,84 | 145,8 / 116,8 | 13272 / 9683 | 1,45 |
| 3 | 5,90 | 147,4 / 122,7 | 10491 / 7581 | 1,46 |
| 4 | 10,37 | 178,3 / 146,0 | 11666 / 7895 | 1,46 |

## Patentansprüche

1. Biokompositplatte, umfassend
a) mindestens eine Naturfaser und
b) mindestens ein duroplastisches Biopolymer,
**dadurch gekennzeichnet, dass**
o die Biokompositplatte eine Restfeuchte, bezogen auf ihr Gesamtgewicht, kleiner 8,0 Gew.-% aufweist,
o die Biokompositplatte mindestens zwei Bögen Papier umfasst,
o das Biopolymer ein Furanharz einschließt, das durch Polymerisation einer Zusammensetzung erhältlich ist, die eine Verbindung der Formel (I) und/oder der Formel (II) enthält 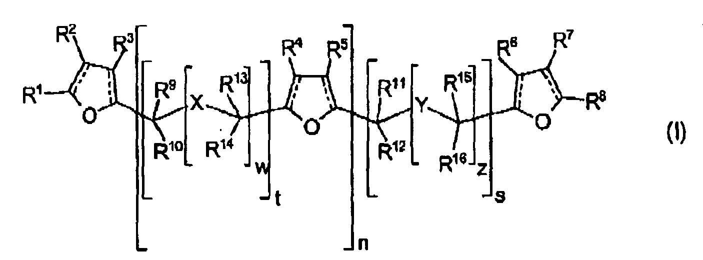 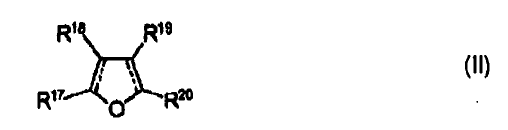 wobei
• n eine ganze Zahl zwischen 0 und 20 ist,
• t und s, jeweils unabhängig voneinander, eine ganze Zahl zwischen 1 und 20 sind,
• w und z, jeweils unabhängig voneinander, 0 oder 1 sind,
• X und Y, jeweils unabhängig voneinander, O, S oder N-R²¹ sind,
• R¹ R², R³, R⁴, R⁵, R⁶, R⁷, R⁸, R⁹, R¹⁰, R¹¹, R¹², R¹³, R¹⁴, R¹⁵, R¹⁶ R¹⁸, R¹⁹ und R²¹, jeweils unabhängig voneinander, Wasserstoff, C₁C₂₀-Alkyl, C₂-C₂₀-Alkenyl, C₂-C₂₀-Alkinyl, C₅-C₂₄-Aryl, C₅-C₁₂-Heteroaryl, Carboxyaldehyd, Hydroxyl, Hydroxyalkyl, Carboxyl, Amino, Nitro, Formyl, Alkylamino, Aminoalkyl, Alkylaminoalkyl, Furyl, Furylalkyl, Hydroxyalkylfurylalkyl, Alkyloxy, Alkyloxyalkyl, Alkenyloxy, Alkylcarbonylalkenyl, Oxiranyl, Alkylcarbonaloxyalkyl, Alkyloxycarbonylalkenyl, Alkenylcarbonyloxyalkl, Isocyanat, Isocyanatalkyl, Alkylcarboxy, Alkenylcarboxy, Alkylcarbonyl, Alkenylcarbonyl, Halogencarbonyl, Halogenalkyl, Halogenaryl, Halogenalkenyl, Imino, Thiol, Alkylthio, Thioalkyl, Alkylthioalkyl, Cyano, Alkylsulfonyl und/oder eine Sulfonsäuregruppe sind, wobei jede Gruppe mit C₁-C₂₀-Alkyl, C₂-C₂₀-Alkenyl, C₂-C₂₀-Alkinyl, C₅-C₂₄-Aryl, Hydroxyl, Carboxyl, Nitro, Amino, Furyl, Furylalkyl, Alkylfuryl, Hydroxyalkylfurylalkyl, Isocyanat, Formyl, Halogencarbonyl, Thiol und/oder Alkylthio substituiert sein kann,
• R¹⁷ Wasserstoff, C₁-C₂₀-Alkyl, C₂-C₂₀-Alkenyl, C₂-C₂₀-Alkinyl, C₅-C₂₄-Aryl, C₅-C₁₂-Heteroaryl, Carboxyaldehyd, Hydroxyl, Hydroxyalkyl, Carboxyl, Amino, Nitro, Formyl, Alkylamino, Aminoalkyl, Alkylaminoalkyl, Furyl, Furylalkyl, Hydroxyalkylfurylalkyl, Alkyloxy, Alkyloxyalkyl, Alkenyloxy, Alkylcarbonylalkenyl, Oxiranyl, Alkylcarbonyloxyalkyl, Alkyloxycarbonylalkenyl, Alkenylcarbonyloxyalkyl, Isocyanat, lsocyanatalkyl, Alkylcarboxy, Alkenylcarboxy, Alkylcarbonyl, Alkenylcarbonyl, Halogencarbonyl, Halogenalkyl, Halogenaryl, Halogenalkenyl, lmino, Thiol, Alkylthio, Thioalkyl, Alkylthioalkyl, Cyano, Alkylsulfonyl und/oder eine Sulfonsäuregruppe ist, wobei jede Gruppe mit C₁-C₂₀-Alkyl, C₂-C₂₀Alkenyl, C₂-C₂₀-Alkinyl, C₅-C₂₄-Aryl, Hydroxyl, Carboxyl, Nitro, Amino, Furyl, Furylalkyl, Alkylfuryl, Hydroxyalkylfurylalkyl, Isocyanat, Formyl, Halogencarbonyl, Thiol und/oder Alkylthio substituiert sein kann,
• R²⁰ C₁-C₂₀-Alkyl, C₂-C₂₀-Alkenyl, C₂-C₂₀-Alkinyl, C₅-C₂₄-Aryl, C₅-C₁₂-Heteroaryl, Carboxyaldehyd, Hydroxyl, Hydroxyalkyl, Carboxyl, Amino, Nitro, Formyl, Alkylamino, Aminoalkyl, Alkylaminoalkyl, Furyl, Furylalkyl, Hydroxyalkylfurylalkyl, Alkyloxy, Alkyloxyalkyl, Alkenyloxy, Alkylcarbonylalkenyl, Oxiranyl, Alkylcarbonyloxyalkyl, Alkyloxycarbonylalkenyl, Alkenylcarbonyloxyalkyl, Isocyanat, Isocyanatalkyl, Alkylcarboxy, Alkenylcarboxy, Alkylcarbonyl, Alkenylcarbonyl, Halogencarbonyl, Halogenalkyl, Halogenaryl, Halogenalkenyl, Imino, Thiol, Alkylthio, Thioalkyl, Alkylthioalkyl, Cyano, Alkylsulfonyl und/oder eine Sulfonsäuregruppe ist, wobei jede Gruppe mit C₁-C₂₀-Alkyl, C₂-C₂₀-Alkenyl, C₂C₂₀-Alkinyl, C₆-C₂₄-Aryl, Hydroxyl, Carboxyl, Nitro, Amino, Furyl, Furylalkyl, Alkylfuryl, Hydroxyalkylfurylalkyl, Isocyanat, Formyl, Halogencarbonyl, Thiol und/oder Alkylthio substituiert sein kann, und
• wobei die gestrichelte Linie eine optionale Doppelbindung darstellt, und
o der Gewichtsanteil des Biopolymers, bezogen auf das Gesamtgewicht der Biokompositplatte, mindestens 20,0 Gew;% beträgt.

2. Biokompositplatte nach Anspruch 1, **dadurch gekennzeichnet, dass** die Biokompositplatte eine Restfeuchte, bezogen auf ihr Gesamtgewicht, kleiner 5,0 Gew.-% aufweist.

3. Biokompositplatte nach Anspruch 1 oder 2, **dadurch gekennzeichnet, dass** die Naturfaser, bezogen auf ihr Gesamtgewicht, mehr als 50,0 Gew.-% Cellulosefasern umfasst.

4. Biokompositplatte nach mindestens einem der vorangehenden Ansprüche, **dadurch gekennzeichnet, dass** der Rest R¹⁷ Wasserstoff ist.

5. Biokompositplatte nach mindestens einem der vorangehenden Ansprüche, **dadurch gekennzeichnet, dass** R²⁰ C₁-C₂ Alkyl, Carboxaldehyd, Hydroxyalkyl, Carboxyl, Aminoalkyl, Alkylaminoalkyl, Hydroxyalkylfurylalkyl, Alkoxyalkyl, Oxiranyl oder Isocyanat, insbesondere Hydroxyalkyl, vor allem CH₂OH, ist und die gestrichelte Linie eine Doppelbindung darstellt.

6. Biokompositplatte nach mindestens einem der vorangehenden Ansprüche, **dadurch gekennzeichnet, dass** die polymerisierbare Zusammensetzung, bezogen auf das Gesamtgewicht der polymerisierbaren Komponenten, mindestens 60,0 Gew.% Furfurylalkohol enthält.

7. Biokompositplatte nach mindestens einem der vorangehenden Ansprüche, **dadurch gekennzeichnet, dass** die polymerisierbare Zusammensetzung, bezogen auf ihr Gesamtgewicht,
- mehr als 70,0 Gew.% eine oder mehrere Verbindungen der Formel (II),
- 0 bis 30,0 Gew.-% eine oder mehrere Verbindungen der Formel (I),
- ggf. 0 bis 40,0 Gew.-% Kondensationsprodukte davon,
umfasst.

8. Biokompositplatte nach mindestens einem der vorangehenden Ansprüche, **dadurch gekennzeichnet, dass** der Gewichtsanteil des Biopolymers, bezogen auf das Gesamtgewicht der Biokompositplatte, im Bereich von 20,0 Gew.-% bis 45,0 Gew.-% liegt.

9. Biokompositplatte nach mindestens einem der vorangehenden Ansprüche, **dadurch gekennzeichnet, dass** das Gewichtsverhältnis von Naturfasern zu Biopolymer im Bereich von 5:1 bis 1:5 liegt.

10. Verfahren zur Herstellung einer Biokompositplatte nach mindestens einem der vorangehenden Ansprüche, **dadurch gekennzeichnet, dass** man
a) mindestens zwei Papierbögen mit einer Zusammensetzung imprägniert, die mindestens eine Verbindung der Formel (I) und/oder der Formel (II) oder ein Präpolymer hiervon umfasst,
b) die Bögen aus Schritt a. übereinander legt und unter Druckerhöhung und Temperaturerhöhung flächig miteinander verpresst.

11. Verfahren nach Anspruch 10, **dadurch gekennzeichnet, dass** man die Verbindung der Formel (I) oder der Formel (II) in Schritt b. polymerisiert und/oder vernetzt.

12. Verfahren nach Anspruch 10 oder 11, **dadurch gekennzeichnet, dass** man Papierbögen mit einem Rohpapierflächengewicht im Bereich von 150 g/m² bis 250 g/m² einsetzt.

13. Verfahren nach Anspruch 10, 11 oder 12, **dadurch gekennzeichnet, dass** man recycelte Papierbögen einsetzt.

14. Verwendung einer Biokompositplatte nach mindestens einem der Ansprüche 1 bis 9 für Wandverkleidungen, Arbeitsflächen, Ladeneinrichtungen, Regale, Theken, Möbel oder Bodenbeläge.

15. Paneel, das einen Träger und eine auf dem Träger haftende Biokompositplatte nach mindestens einem der Ansprüche 1 bis 9 umfasst,
